(19) Europäisches Patentamt
European Patent Office
Office européen des brevets

(11) EP 2 355 926 B1

# (12) EUROPEAN PATENT SPECIFICATION

(45) Date of publication and mention of the grant of the patent:
**04.01.2017 Bulletin 2017/01**

(21) Application number: **09751884.9**

(22) Date of filing: **05.11.2009**

(51) Int Cl.:
***B01J 31/12*** *(2006.01)* ***B01J 31/16*** *(2006.01)*
***B01J 31/22*** *(2006.01)* ***B01J 31/14*** *(2006.01)*
***C08F 4/00*** *(2006.01)*

(86) International application number:
**PCT/EP2009/064669**

(87) International publication number:
**WO 2010/052263 (14.05.2010 Gazette 2010/19)**

## (54) SOLID CATALYST COMPOSITION

FESTE KATALYSATORZUSAMMENSETZUNG

COMPOSITION DE CATALYSEUR SOLIDE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **07.11.2008 EP 08168620**

(43) Date of publication of application:
**17.08.2011 Bulletin 2011/33**

(73) Proprietor: **Borealis AG**
**1220 Vienna (AT)**

(72) Inventors:
- **HAKALA, Kimmo**
  **FIN-00100 Helsinki (FI)**
- **MANSNER, Erik**
  **FIN-00100 Helsinki (FI)**
- **DENIFL, Peter**
  **FIN-00990 Helsinki (FI)**
- **LEHTINIEMI, Ismo**
  **FIN-04500 Kellokoski (FI)**
- **KAUHANEN, Jyrki**
  **FIN-07230 Monninkylä (FI)**
- **HUHTANEN, Lauri**
  **FIN-07940 Loviisa (FI)**

(74) Representative: **Lux, Berthold**
**Maiwald Patentanwalts GmbH**
**Elisenhof**
**Elisenstraße 3**
**80335 München (DE)**

(56) References cited:
**EP-A- 0 519 236** **EP-A- 1 847 551**
**US-B1- 6 383 969**

- **DATABASE WPI Week 200120 Thomson Scientific, London, GB; AN 2001-194665 XP002513438 & JP 2001 011112 A (MITSUI CHEM INC) 16 January 2001 (2001-01-16)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 355 926 B1

## Description

It is well known that the huge variety of different polymer types is achieved by specific tailored processes. Such different processes have typically different variables and parameters, including different monomer(s), solvents, additives, reaction conditions, catalyst systems, and the like. The properties and characteristics of the final products are quite often dependent on the components used in the process and on the parameters of the process that are selected, and it has been recognized that small modifications in such variables and parameters can create significant differences in not only the final product, e.g. polymer properties, but also in the effectiveness and operability of the overall process, and the catalyst productivity.

As a general matter the catalyst productivity should be as high as possible. Further to achieve high out-put rates the bulk density and flowability of the produced polymer should be high.

Nowadays, a slurry reactor is a type of reactor which is frequently used in polymerisation processes either alone or in combination with additional reactors, like other slurry reactors or gas phase reactors. The reaction medium in a slurry reactor is either a saturated light hydrocarbon (especially for the manufacture of polyethylene) or liquid monomer, like propylene (for the manufacture of polypropylene). Furthermore, heterogeneous catalyst systems are commonly used in such processes to avoid the drawbacks of the homogeneous processes, like reactor fouling caused by the obtained polymers with low bulk density (fluffy material).

Heterogeneous catalyst systems, single site or Ziegler-Natta type, are normally used in olefin polymerisation processes. Conventional heterogeneous catalysts are solid catalyst systems, where catalyst components are supported or loaded onto catalytically inert carrier material, such as organic and inorganic support materials, like silica, $MgCl_2$ or porous polymeric material. Silica is the mostly used as carrier material with single site, e.g. metallocene type catalysts. However, there are problems which result from the use of supported catalyst systems. For instance, it is difficult to get an even distribution of the catalyst components in the porous carrier material; and leaching of the catalyst components from the support can occur. Such drawbacks lead to unsatisfactory polymerisation behaviour of the catalyst, and, as a result, the morphology of the polymer product thus obtained is also poor. Furthermore, such classic heterogeneous catalyst systems show reduced catalyst activity which is of course detrimental as the catalyst amount must be increased which in turn leads to polymer products contaminated with rather high amounts of catalyst residues.

To avoid the contamination of the polymer products with catalytic residues new catalyst systems have been developed being self-supported, i.e. being not in need of catalytically inert support material, and being further featured by a low porosity and low surface area. Such new catalyst systems enable in principle to increase the output rate of polymer processes since the bulk density of the polymerized product can be increased. For the first time such new metallocene catalyst systems have been for instance described in WO 03/051934. However these new self-supported catalyst systems have the drawback that they tend to dissolve to some extent in the polymerisation medium needed in the slurry reactors and thus the outstanding morphology of the self-supported catalyst systems is reduced. Further it must be considered that the self-supported catalyst systems generates - due to the high amount of catalytically active species in the catalyst system - at the beginning of the polymerization high temperatures what cause a melting of the produced material. Both effects, i.e. the partial dissolving of the catalyst system and the heat generation, cause fouling and sheeting in the reactors.

Thus there is the need to develop new catalyst system which show the good properties of self-supported catalyst systems and which can be effectively applied in polymerization processes for ethylene and propylene, especially in processes, where at least one polymerisation step is carried out in slurry phase.

Thus the object of the present invention is to provide a new catalyst composition which enables high polymerisation productivity in terms of high polymer out-put and which avoids fouling and/or sheeting in the reactor system. A further object is that the catalyst composition shall show an excellent catalytic activity and being able to keep it's excellent morphology in the process, e.g. being not soluble to any extent in the polymerization medium, for instance in the polymerization reaction medium of a slurry reactor.

The finding of the present invention is that the catalyst system must show a low porosity and must enable that its catalytically active species are protected against the polymerization medium in a slurry reactor. A further finding is that the catalytically active species are dispersed in the protecting material.

Accordingly the present invention is directed to a solid catalyst composition comprising a polymer matrix (A) and distributed therein a solid catalyst system (B) is further characterized in that

(a) the solid catalyst system (B)

(i) has

($\alpha$) a porosity measured according to ASTM 4641 of less than 1.40 ml/g,
and/or

(β) a surface area measured according to ASTM D3663 of less than 15 $m^2/g$,

(ii) comprises

(α) a transition metal compound of formula (I)

$$L_mR_nMX_q \quad (I)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
preferably said organic ligands (L) and the bridging groups (R) do not comprise polymerizable olefinic groups,
"m" is 2 or 3,
"n" is 0, 1 or 2,
"q" is 1, 2 or 3,
m+q is equal to the valency of the transition metal (M),
and

(β) a cocatalyst (Co) comprising a compound of Al,
and

(iii) is free of silica carrier material and $MgCl_2$,
and

(b) the weight ratio of the polymer matrix (A) and the catalyst system (B) [weight polymer matrix (A)/weight catalyst system (B)] in the solid catalyst composition is in the range of 1.0 to 6.0.

Preferably the invention is further specified in that the polymer matrix (A) is not covalent bonded to anyone of the organic ligands (L) and/or to anyone of the bridging groups (R) of the transition metal compound as defined in the instant invention. Additionally it is appreciated that the mol ratio of Al of the cocatalyst (Co) and the transition metal "M" of the transition metal compound [Al/M] is from 100 to 800 mol/mol. Further it is preferred that the solid catalyst composition according to this invention is obtainable, preferably is obtained, by polymerizing at least one olefin monomer in the presence of the catalyst system (B) being in a solid form.

Surprisingly it has been found out that with the above defined solid catalyst compositions improvements in the process operability can be achieved. In particular it can be avoided that the catalytic active species are dissolved in the polymerization medium of the slurry reactor. Accordingly the morphology of the catalyst system within the new catalyst composition remains good during the polymerisation process which guaranties a high bulk density and flowability of the thus produced polymer due to the replica effect. It has been shown that in case the catalyst system is featured by a low porosity and/or low surface area also the produced polymer material show comparable properties, i.e. having no or only few pores on the polymer surface and thus having a rather low surface area. Further also the excessive heat generation at the beginning of the polymerization of the known neat self-supported catalyst systems is drastically reduced with the new catalyst composition which further contributes to the good end product properties of the polymeric material by avoiding agglomeration and fluffy polymer material formation and sheeting of material at the reactor walls or transport lines. Accordingly with the new solid catalyst composition a fouling and sheeting in the overall reactor system is avoided which is a clear improvement compared to the case with known neat self-supported catalyst systems or also known supported catalyst systems.

The new solid catalyst compositions as defined above are in particular featured by the use of self-supported catalyst systems, which have been dispersed into polymeric matrix material. Thereby the catalyst system (B) is distributed within the polymer matrix. The term "distributed" shall preferably indicate that the catalyst system (B) is not concentrated at one place within the matrix (A) but (evenly) dispersed within the matrix (A). This has the advantage that - contrary to commercially available supported catalyst systems -an overheating at the beginning of the polymerization process due to "hot spots" areas caused by concentration of catalytic species at one place is diminished which in turn supports a start of the polymerization in a controlled way under mild conditions. The even distribution of catalyst system in polymer matrix is mainly achieved due to the manufacture of the inventive solid catalyst composition as described in detail below.

One remarkable feature of the process defined in detail below is that the inventive catalyst composition is obtained by heterogeneous catalysis, i.e. the catalyst system (B) is in solid form when polymerizing at least one olefin monomer, preferably at least one α-olefin monomer, to the matrix (A) in which then the catalyst system (B) is dispersed. Thus the inventive catalyst composition is obtainable, preferably obtained, by heterogeneous catalysis using the solid catalyst system (B) as defined in the instant invention.

A further important requirement of the solid catalyst composition according to the present invention is that the catalyst system (B), i.e. the catalytic active species within the solid catalyst composition, is protected against dissolution phenomena in a slurry reactor, i.e. in low molar mass hydrocarbons, like propane, i-butane, pentane, hexane or propylene. On the other hand the protection of the catalyst system should be not too massive otherwise the catalytic activity of the active species might be deteriorated. In the present invention the conflicting interests one the one hand of high catalytic activity of the catalyst system and on the other hand of the solid stability of the catalyst system in the polymerization medium of the slurry reactor is achieved by protecting the catalyst system (B) by a matrix (A) wherein the matrix (A) is present in rather low amounts within the solid catalyst composition. It has been surprisingly found out that a rather low weight ratio of polymer matrix (A) to catalyst system (B) [weight polymer matrix (A)/weight catalyst system (B)], leads to a satisfactory protection against dissolution by keeping the catalyst activity on high levels. Accordingly it is appreciated that the weight ratio of the solid composition [weight polymer matrix (A)/weight catalyst composition (B)] is in the range of 1.0 to 6.0. To achieve a reasonable protection against dissolution the polymerization degree shall preferably exceed a value of 1.0. Preferred ranges of the polymerization degree shall be 1.0 to 5.0, more preferably of 2.0 to 5.0.

Alternatively and/or additionally the mol ratio of Al of the cocatalyst (Co) and the transition metal "M" of the transition metal compound shall be preferably kept in a specific ratio. Accordingly it is appreciated that the mol ratio of Al of the cocatalyst (Co) and the transition metal "M" of the transition metal compound [Al/M] is in a range of 100 to 800 mol/mol, more preferably in a range of 150 to 600 mol/mol, yet more preferably in a range of 200 to 400 mol/mol.

The polymer matrix (A) can be any type of polymer as long as it prevents the dissolution of the catalyst system (B) in the polymerization medium of a slurry reactor, i.e. low molar mass hydrocarbons, like propane, i-butane, pentane, hexane or propylene, and is catalytically inert. Accordingly the polymer matrix (A) is preferably based on olefin monomers, like α-olefin monomers, each having 2 to 20 carbon atoms. The olefin, like a-olefin, can be linear or branched, cyclic or acyclic, aromatic or aliphatic. Preferred examples are ethylene, propylene, 1-butene, 1-pentene, 2-methyl-1-butene, 3-methyl-1-butene, 1-hexene, 2-methyl-1-pentene, 3-methyl-1-pentene, 4-methyl-1-pentene, 2-ethyl-1-butene, 2,3-dimethyl-1-butene, 1-octene, styrene, and vinylcyclohexane.

It is in particular preferred that the polymer matrix (A) corresponds to the polymer which shall be produced with the inventive solid catalyst composition. Accordingly it is preferred that the polymer matrix (A) is preferably a polymer selected from the group consisting of ethylene homopolymer, ethylene copolymer, propylene homopolymer and propylene copolymer.

Further it is appreciated that the weight average molecular weight ($M_w$) of the polymer matrix (A) is rather low. Thus it is preferred that the polymer matrix (A) has weight average molecular weight ($M_w$) of below or equal 300,000 g/mol, more preferably below 50,000 g/mol. In preferred embodiments the weight average molecular weight ($M_w$) of the polymer matrix (A) is in the range of 3,000 to 30,000 g/mol, more preferably in the range of 5,000 to 20,000 g/mol.

Moreover it is appreciated that the solid catalyst composition of the instant invention comprising the polymer matrix (A) and dispersed therein the catalyst system (B) has preferably a reduced porosity. Accordingly particles of the solid catalyst composition have preferably a low surface area, i.e. the surface of the particles of the catalyst composition are essentially free of pores penetrating into the interior of said particles. Such a plain surface of the catalyst particles is desirable as it positively contributes to the end properties of the polymerized material. Therefore it is preferred that the particles of the catalyst composition have a rather low porosity, i.e. a porosity measured according to ASTM 4641 of less than 1.4 ml/g, preferably of less than 1.0 ml/g, more preferably of less than 0.5 ml/g, still more preferably of less than 0.3 ml/g. In another preferred embodiment the porosity is not detectable when determined with the method applied according to ASTM 4641.

A further requirement of the present invention is that the solid catalyst composition must comprise a specific catalyst system (B). As stated in the introductory part of this invention the properties of the produced polymers are dependent on many factors. One essential requirement is the type of catalyst. For instance Ziegler-Natta catalysts tend to produce polymer material with a rather broad molecular weight distribution whereas metallocene catalysts enable the manufacture of polymers with a narrow molecular length distribution. In the present invention catalysts are intended to be used which belong not to the group of Ziegler-Natta catalysts but to the group which render possible a production of polymers with a rather narrow molecular weight distribution. Examples of such catalyst types are metallocenes, scorpionate compounds and non-metallocenes.

Further it is appreciated that such type of catalyst systems are self-supported, i.e. they are solid, but do not comprise catalytically inert external carrier material, such as organic and inorganic support materials, like silica, $MgCl_2$ or porous polymeric carrier material.

However as outlined above these types of catalysts systems tend to dissolve in the polymerization medium of

slurry reactors as indicated above which is detrimental. Nevertheless to be able to produce specific polymers, as for instance polyethylene and isotactic polypropylene, with high bulk density and narrow molecular weight distribution the use of non-Ziegler-Natta catalyst systems being preferably self-supported are essential. Thus the solid catalyst composition must comprise a solid catalyst system (B), said solid catalyst system (B) comprising, preferably consisting to 60 wt.-% of, more preferably consisting to 85 wt.-% of, yet more preferably consisting to 95 wt.-% of, yet still more preferably consisting of,

(i) a transition metal compound of formula (I)

$$L_mR_nMX_q \qquad (I)$$

wherein

"M" is a transition metal of anyone of the groups 3 to 10 of the periodic table (IUPAC), preferably a transition metal of anyone of the groups 4 to 6 of the periodic
table (IUPAC), more preferably titanium (Ti), zirconium (Zr) or hafnium (Hf), i.e. zirconium (Zr) or hafnium (Hf),
each "X" is independently a monovalent anionic σ-ligand,
each "L" is independently an organic ligand which coordinates to the transition metal (M),
"R" is a bridging group linking two organic ligands (L),
preferably said organic ligands (L) and the bridging groups (R) do not comprise polymerizable olefinic groups,
"m" is 2 or 3,
"n" is 0, 1 or 2,
"q" is 1,2 or 3,
m+q is equal to the valency of the transition metal (M),
and

(ii) a cocatalyst (Co) comprising, preferably consisting of, a compound of Al.

The catalyst system (B) according to this invention may comprise small amounts of other organic or inorganic material not being a transition metal compound of formula (I) and a cocatalyst (Co) as defined in the instant invention. In such a case the transition metal compound of formula (I) and the cocatalyst (Co) constitute at least 60 wt.-% of the catalyst system (B) and the additionally organic or inorganic material, preferably organic material, at most 40 wt.-% of the catalyst system (B). Preferably the transition metal compound of formula (I) and the cocatalyst (Co) constitute at least 85 wt-%, more preferably at least 90 wt-%, still more preferably at least 95 wt-% of the catalyst system (B). In the most preferred case the transition metal compound of formula (I) and the cocatalyst (Co) constitute 100 wt-% of the catalyst system (B). Thus, the catalyst system (B) contains at most 15 wt-% of additional material, more preferably at most 10 wt-%, still more preferably at most 5 wt-%, such as 0 to 10 wt-%, or 0 to 5 wt-% of additional material. As example, catalyst system (B) may comprise in addition to the Al compound cocatalyst, other cocatalysts of compounds of Group 13 of the Periodic table (IUPAC), like boron compounds.

The organic ligands (L) and/or the bridging groups (R) can be any kind of residues of the transition metal compound as defined in the instant invention. However it is in particular preferred that the organic ligands (L) and/or the bridging groups (R) do not comprise a polymerizable residue. A polymerizable residue according to this invention is any functional group which enables the covalent bonding of the transition metal compound via the organic ligands (L) and/or the bridging groups (R) with the polymer matrix (A). Accordingly it is in particular preferred that the organic ligands (L) and/or the bridging groups (R) of the transition metal compound as defined in the instant invention do not comprise polymerizable olefinic groups, like olefinically unsaturated substituents. Examples of such polymerizable olefinic groups are substituents having the formula (IV)

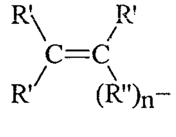

wherein

R" is a hydrocarbyl diradical having 1 to 20 carbon atoms; more preferably 2 to 10, n is 1 or 0, and

each R' is individually selected from the group consisting of organo radicals having 1 to 10 carbon atoms and hydrogen.

Most preferably R" has at least two carbons in its main alkylene chain, i.e. it is a divalent ethylene radical or a higher homolog thereof.
Accordingly it is in particular preferred that the organic ligands (L) and/or the bridging groups (R) do not comprise polymerizable olefinic groups having the formula (IV).
As a consequence of the previous paragraph it is preferred that the polymer matrix (A) is not covalent bonded to the transition metal compound of formula (I) via the organic ligands (L) and/or the bridging groups (R).
In a more preferred definition, each organic ligand (L) is independently

(a) a substituted or unsubstituted cycloalkyldiene, preferably a cycloalkyldiene selected from the group consisting of unsubstituted cyclopentadiene, substituted cyclopentadiene, monofused derivative of a cyclopentadiene, bifused derivative of a cyclopentadiene and multifused derivative of a cyclopentadiene, or
(b) an acyclic $\eta^1$-, an acyclic $\eta^2$-, an acyclic $\eta^3$-, an acyclic $\eta^4$- or an acyclic $\eta^6$-ligand composed of atoms from Groups 13 to 16 of the periodic table (IUPAC), preferably an acyclic $\eta^1$-, an acyclic $\eta^2$-, an acyclic $\eta^3$-, an acyclic $\eta^4$- or an acyclic $\eta^6$-ligand composed of atoms from Groups 13 to 16 of the periodic table (IUPAC) in which the open chain ligand may be fused with one or two, preferably two, aromatic or non-aromatic rings and/or bear further substituents, or
(c) a cyclic $\sigma$-, cyclic $\eta^1$-, a cyclic $\eta^2$-, a cyclic $\eta^3$-, a cyclic $\eta^4$- or a acyclic $\eta^6$-, mono-, bi- or multidentate ligand composed of unsubstituted or substituted mono-, bi- or multicyclic ring systems selected from aromatic or non-aromatic or partially saturated ring systems and containing carbon ring atoms.

More preferably at least one of the organic ligands (L), preferably both organic ligands (L), is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.
Further in case the organic ligands (L) are substituted it is preferred that at least one organic lignad (L), preferably both organic ligands (L), comprise(s)

(a) one or more residues independently selected from the group consisting of halogen, C1 to C10 alkyl, C2 to C20 alkenyl, C2 to C20 alkinyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C1 to C20 haloalkyl,
or more preferably
(b) one or more residues independently selected from the group consisting of halogen, C1 to C10 alkyl, C3 to C12 cycloalkyl, C6 to C20 aryl, C7 to C20-arylalkyl, C3 to C12 cycloalkyl which contains 1, 2, 3 or 4 heteroatom(s) in the ring moiety, C6 to C20 heteroaryl and C1 to C20 haloalkyl.

By "$\sigma$-ligand" is meant throughout the invention a group bonded to the transition metal (M) at one or more places via a sigma bond.
Further the ligands (X) are preferably independently selected from the group consisting of hydrogen, halogen, C1 to C20 alkyl, C1 to C20 alkoxy, C2 to C20 alkenyl, C2 to C20 alkynyl,C3 to C12 cycloalkyl, C6 to C20 aryl, C6 to C20 aryloxy, C7 to C20 arylalkyl, C7 to C20 arylalkenyl, -SR", $-PR"_3$, $-SiR"_3$, $-OSiR"_3$ and $-NR"_2$, wherein each R" is independently hydrogen, C1 to C20 alkyl, C2 to C20 alkenyl, C2 to C20 alkynyl, C3 to C12 cycloalkyl or C6 to C20 aryl.
Additionally the bridging group (R) may a bridge of 1 to 7 atoms length, preferably with at least one heteroatom. It is in particular appreciated that the bridging group(s) (R) has(have) the formula (III)

$$-Y(R')_2- \qquad (III)$$

wherein

Y is carbon (C), silicon (Si) or germanium (Ge), and
R' is $C_1$ to $C_{20}$ alkyl, $C_6$ to $C_{12}$ aryl, $C_7$ to $C_{12}$ arylalkyl, or trimethylsilyl.

According to a preferred embodiment said transition-metal-compound of formula (I) is a group of compounds known as metallocenes. Said metallocenes bear at least one organic ligand, generally 1, 2 or 3, e.g. 1 or 2, which is $\eta$-bonded to the metal, e.g. a $\eta^2$ - to $\eta^6$-ligand, such as a $\eta^5$-ligand.
Preferably, a metallocene according to this invention is a transition metal of anyone of the groups 4 to 6 of the

periodic table (IUPAC), suitably titanocene, zirconocene or hafnocene, which contains at least one $\eta^5$-ligand, which is an optionally substituted cyclopentadienyl, an optionally substituted indenyl, an optionally substituted tetrahydroindenyl or an optionally substituted fluorenyl. Thus the transition metal compound has preferably the formula (II)

$$(Cp)_2R_nMX_2 \qquad (II)$$

wherein

"M" is zirconium (Zr), hafnium (Hf), Or titanium (Ti), preferably zirconium (Zr) or hafnium (Hf),
each "X" is independently a monovalent anionic $\sigma$-ligand, preferably selected from the group consisting of hydrogen, halogen, C1 to C20 alkyl, C1 to C20 alkoxy, C2 to C20 alkenyl, C2 to C20 alkynyl,C3 to C12 cycloalkyl, C6 to C20 aryl, C6 to C20 aryloxy, C7 to C20 arylalkyl, C7 to C20 arylalkenyl, -SR", -PR"$_3$, -SiR"$_3$, -OSiR"$_3$ and -NR"$_2$, wherein each R" is independently hydrogen, C1 to C20 alkyl, C2 to C20 alkenyl, C2 to C20 alkynyl, C3 to C12 cycloalkyl or C6 to C20 aryl,
each "Cp" is independently an unsaturated organic cyclic ligand which coordinates to the transition metal (M),
"R" is a bridging group linking two organic ligands (L),
"n" is 0 or 1, and
at least one "Cp"-ligand, preferably both "Cp"-ligands, is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

The substituted Cp-ligand(s) may have one or more substituent(s) being selected form the group consisting of halogen, hydrocarbyl (e.g. C1 to C20-alkyl, C2 to C20-alkenyl, C2 to C20-alkinyl, C3 to C12-cycloalkyl, C6 to C20-aryl or C7 to C20-arylalkyl), C3 to C12-cycloalkyl which contains 1, 2, 3 or 4 heteroatom(s) in the ring moiety, C6 to C20-heteroaryl, C1 to C20-haloalkyl, -SiR"$_3$ , -SR", -PR"$_2$ or -NR"$_2$, each R" is independently a hydrogen or hydrocarbyl (e. g.C1 to C20-alkyl, C2 to C20-alkenyl, C2 to C20-alkinyl, C3 to C12-cycloalkyl or C6 to C20-aryl) or e. g. in case of-NR"$_3$, the two substituents R" can form a ring, e.g. five-or six-membered ring, together with the nitrogen atom wherein they are attached to.

Further "R" of formula (II) is preferably a bridge of 1 to 7 atoms, e. g. a bridge of 1 to 4 C-atoms and 0 to 4 heteroatoms, wherein the heteroatom(s) can be e.g. silicon (Si), germanium (Ge) and/or oxygen (O) atom(s), whereby each of the bridge atoms may bear independently substituents, such as C1 to C20-alkyl, tri(C1 to C20-alkyl)silyl, tri(C1 to C20-alkyl)siloxy or C6 to C20-aryl substituents); or a bridge of 1 to 3, e.g. one or two, hetero atoms, such as silicon (Si), germanium (Ge) and/or oxygen (0) atom(s), e.g. -SiR$^1_2$-, wherein each R$^1$ is independently C1 to C20-alkyl, C6 to C20-aryl or tri(C1 to C20-alkyl)silyl- residue, such as trimethylsilyl-.

The "Cp"-ligand of formula (II) is preferably cyclopentadienyl, indenyl, tetrahydroindenyl or fluorenyl, optionally substituted as defined above and may further bear a fused ring of 3 to 7 atoms, e.g. 4, 5 or 6, which ring may be aromatic or partially saturated.

In a suitable subgroup of the compounds of formula (II)
each "Cp"-ligand independently bears one or more substituents selected from C1 to C20-alkyl, C6 to C20-aryl, C7 to C20-arylalkyl (wherein the aryl ring alone or as a part of a further moiety may further be substituted as indicated above), wherein R" is as indicated above, preferably C1 to C20-alkyl,
the ligand "X" is hydrogen (H), halogen, C1 to C20-alkyl, C1 to C20-alkoxy, C6 to C20-aryl, C7 to C20-arylalkenyl or -NR"$_2$ as defined above, e.g. -N(C1 to C20-alkyl)$_2$, and the bridging group "R" is a methylene, ethylene or a silyl bridge, whereby the silyl can be substituted as defined above, e.g. a dimethylsilyl=, methylphenylsilyl= or trimethylsilylmethylsilyl= -bridge.

A specific subgroup includes the well known metallocenes of Zr, Hf and Ti with one or two, e.g. two, organic ligands (L) which may be bridged or unbridged cyclopentadienyl ligands optionally substituted with e.g. siloxy, alkyl and/or aryl as defined above, or with two unbridged or bridged indenyl ligands optionally substituted in any of the ring moieties with e.g. alkyl and/or aryl as defined above, e.g. at 2-, 3-, 4- and/or 7-positions. As specific examples e.g. bis (alkylcyclopentadienyl) Zr (or Ti or Hf) dihalogenides can be mentioned, such as bis-(n-butylcyclopentadienyl) $ZrCl_2$ and bis-(n-butylcyclopentadienyl) $HfCl_2$, see e.g. EP 129 368.

Particularly preferred are the following compounds:

bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,

bis(1,2,4-trimethylcyclopentadienyl)Zr dibenzyl,
bis(tetrahydroindenyl)Zr dibenzyl,
bis(n-butylcyclopentadienyl)Hf $(CH_2SiMe_3)_2$,
bis(n-propylcyclopentadienyl)Hf $(CH_2SiMe_3)_2$,
bis(i-propylcyclopentadienyl)Hf $(CH_2SiMe_3)_2$
bis(1,2,4-trimethylcyclopentadienyl)Zr$(CH_2SiMe_3)_2$,
rac-dimethylsilanediylbis(2-methyl-4-phenylindenyl)zirconium dichloride,
rac-cyclohexyl(methyl)silanediylbis[2-methyl-4-(4'-*tert*- butylphenyl)indenyl]zirconium dichloride,
rac-dimethylsilanediyl[2-methyl-4-(4'-*tert*-butylphenyl)indenyl] [2-isopropyl-4-(4'-*tert*-butylphenyl)indenyl]zirconium dichloride,
wherein Me is methyl.

Most preferred compounds are Hf dibenzyl and Zr dichloride compounds of the above list, i.e.
bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,
rac-dimethylsilanediylbis(2-methyl-4-phenylindenyl)zirconium dichloride,
rac-cyclohexyl(methyl)silanediylbis[2-methyl-4-(4'-tert- butylphenyl)indenyl] zirconium dichloride and
rac-dimethylsilanediyl[2-methyl-4-(4'-tert-butylphenyl)indenyl] [2-isopropyl-4-(4'-tert-butylphenyl)indenyl]zirconium dichloride.

Examples of compounds wherein the metal atom bears a-NR"$_2$ ligand are disclosed i.a. in WO 98/56831 and WO 00/34341. The contents of the documents are incorporated herein by reference. Further metallocenes are described e.g. in EP 260 130. As further examples of usable metallocenes may also be found e.g. from WO 97/28170, WO 98/46616, WO 98/49208, WO 99/12981, WO 99/19335, WO 98/56831, WO 00/34341, EP 423 101 and EP 537 130 as well as V. C. Gibson et al., in Angew. Chem. Int. Ed., engl., vol 38,1999, pp 428-447, the disclosures of which are incorporated herein by reference.

Said transition metal compounds of formula (I) and (II) being of metallocene type and their preparation are well known in the art. Metallocenes as defined in the instant invention are particularly preferred.

Alternatively, in a further subgroup of the metallocene compounds, the transition metal (M) bears a "Cp"-ligand as defined above and additionally a $\eta^1$- or $\eta^2$-ligand, wherein said ligands may or may not be bridged to each other. This subgroup includes so called "scorpionate compounds" (with constrained geometry) in which the transition metal (M) is complexed by a $\eta^5$-ligand bridged to a $\eta^1$- or $\eta^2$-ligand, preferably $\eta^1$- (for example $\sigma$-bonded) ligand, e.g. a metal complex of a "Cp"-ligand as defined above, e.g. a cyclopentadienyl group, which bears, via a bridge member, an acyclic or cyclic group containing at least one heteroatom, e.g. -NR"$_2$ as defined above. Such compounds are described e.g. in WO 96/13529, the contents of which are incorporated herein by reference.

Any alkyl, alkenyl or alkynyl residue referred above alone or as a part of a moiety may be linear or branched, and contain preferably of up to 9, e.g. of up to 6, carbon atoms. Aryl is preferably phenyl or naphthalene. Halogen means F, Cl, Br or I, preferably Cl.

Another subgroup of the transition metal compounds of formula (I) usable in the present invention is known as non-metallocenes wherein the transition metal (M) (preferably a Group 4 to 6 transition metal, suitably Ti, Zr or Hf) has a coordination ligand other than cyclopentadienyl ligand.

The term "non-metallocene" used herein means compounds, which bear no cyclopentadienyl ligands or fused derivatives thereof, but one or more non-cyclopentadienyl $\eta$-, or $\sigma$-, mono-, bi- or multidentate ligand. Such ligands can be chosen e.g. from

(a) acyclic, $\eta^1$- to $\eta^4$- or $\eta^6$-ligands composed of atoms from Groups 13 to 16 of the periodic table (IUPAC), e.g. an acyclic pentadienyl ligand wherein the chain consists of carbon atoms and optionally one or more heteroatoms from groups 13 to 16 (IUPAC), and in which the open chain ligand may be fused with one or two, preferably two, aromatic or non-aromatic rings and/or bear further substituents (see e.g. WHO 01/70395, WO 97/10248 and WO 99/41290), or
(b) cyclic $\sigma$-, $\eta^1$- to $\eta^4$--or $\eta^6$-, mono-, bi-or multidentate ligands composed of unsubstituted or substituted mono-, bi-or multicyclic ring systems, e.g. aromatic or non-aromatic or partially saturated ring systems, containing carbon ring atoms and optionally one or more heteroatoms selected from groups 15 and 16 of the periodic table (IUPAC) (see e.g. WO 99/10353).

Bi-or multidentate ring systems include also bridged ring systems wherein each ring is linked via a bridging group, e. g. via an atom from groups 15 or 16 of the periodic table (IUPAC), e.g. N, O or S, to the transition metal (M)

(see e.g. WO 02/060963). As examples of such compounds, i.a. transition metal complexes with nitrogen-based, cyclic or acyclic aliphatic or aromatic ligands, e.g. such as those described in WO 99/10353 or in the Review of V. C. Gibson at al., in Angew. Chem. Int. Ed., engl. , vol 38,1999, pp 428-447, or with oxygen-based ligands, such as group 4 metal complexes bearing bidentate cyclic or acyclic aliphatic or aromatic alkoxide ligands, e.g. optionally substituted, bridged bisphenolic ligands (see i.a. the above review of Gibson et al). Further specific examples of non-$\eta^5$-ligands are amides, amide-diphosphane, amidinato, aminopyridinate, benzamidinate, azacycloalkenyl, such as triazabicycloalkenyl, allyl, beta-diketimate and aryloxide. The disclosures of the above documents are incorporated herein by reference.

The preparation of metallocenes and non-metallocenes, and the organic ligands thereof, usable in the invention is well documented in the prior art, and reference is made e.g. to the above cited documents. Some of said compounds are also commercially available. Thus, said transition metal compounds can be prepared according to or analogously to the methods described in the literature, e.g. by first preparing the organic ligand moiety and then metallating said organic ligand ($\eta$-ligand) with a transition metal. Alternatively, a metal ion of an existing metallocene can be exchanged for another metal ion through transmetallation.

As a further requirement the catalyst system (B) must comprise a cocatalyst (Co). Any cocatalyst (Co) comprising a compound of Al is suitable. Examples of such cocatalyst (Co) are organo aluminium compounds, such as alkyl aluminium compound, like trialkylaluminium compound and/or aluminoxane compound.

Further aluminoxane cocatalysts are described i.a. in WHO 94/28034 which is incorporated herein by reference. These are linear or cyclic oligomers of having up to 40, preferably 3 to 20, -(Al (R''')O)- repeating units (wherein R''' is hydrogen, C1 to C10-alkyl (preferably methyl) or C6 to C18-aryl or mixtures thereof).

Such compounds of Al, preferably aluminoxanes, can be used as the only compound in the cocatalyst (Co) or together with other cocatalyst compound(s). Thus besides or in addition to the compounds of Al, i.e. the aluminoxane, other cation complex forming cocatalyst compounds, like boron compounds can be used. Said cocatalysts are commercially available or can be prepared according to the prior art literature. Preferably however the catalyst system (B) comprises only compounds of Al as cocatalyst (Co)

In particular preferred cocatalysts (Co) for the catalyst system (B) are the aluminoxanes, in particular the C1 to C10-alkylaluminoxanes, most particularly methylaluminoxane (MAO).

However it is in particular preferred that aluminoxanes, in particular the C1 to C10-alkylaluminoxanes, most particularly methylaluminoxane (MAO), is used as the only cocatalyst (Co) within the catalyst system (B) and/or within the solid catalyst composition.

In case of aluminoxanes, such as methylaluminumoxane (MAO), the amount of Al, provided by aluminoxane, can be chosen to provide an Al/transition metal (M) molar ratio e.g. in the range of 50 to 800, preferably in the range of 150 to 600, and nore preferably in the range of 200 to 400 mol/mol

The present invention is directed to a solid catalyst composition in which the catalyst system (B) as defined above is solid, self-supported, i.e. the catalyst system (B) does not comprise catalytically inert carrier material, such as organic and inorganic support materials, like silica, $MgCl_2$ or porous polymeric material.

It is further appreciated that not only the catalyst system (B) which has been used for the inventive solid catalyst composition is preferably self-supported as defined above, but also that the whole solid catalyst composition does not comprise any inert carrier material as those mentioned in the instant invention. Thus it is preferred that the solid catalyst composition comprises the polymer matrix (A) but is free of any external catalytically inert carrier material, such as organic and inorganic support materials, like silica, $MgCl_2$ or porous polymeric carrier material. Even though also the matrix (A) is a polymeric material it is not like an external porous support material, onto which catalyst components are loaded, but polymer matrix of the present invention is formed during the polymerisation of monomers by using the catalyst system (B). In case of prior art, where porous external polymer material is used as carrier, the final catalyst will have porous structure as well. However, when solid catalyst system (B), having a compact morphology (very low porosity) is used in polymerising olefin to get a solid catalyst composition, the morphology of the final catalyst composition is, due to the replica effect, compact as well. Thus the morphology and function of polymer matrix (A) of the present invention, and a porous polymer carrier material differ essentially from each other.

Accordingly in a preferred embodiment the solid catalyst composition comprises the polymer matrix (A) and the catalyst system (B) as defined in the instant invention but is free of silica carrier material and/or $MgCl_2$ and/or porous polymeric material, more preferably free of any organic and/or inorganic catalytically inert support or carrier material.

The catalyst system (B), used in the preparation of the catalyst composition of the present invention, is further featured by its low porosity and/or its rather low surface area. In other words the surface area is essentially free of pores penetrating into the interior of the catalyst system (B). Such a plain surface of the catalyst system (B) is desirable as it positively contributes to the end properties of the polymerized material. Inter alia a low surface area of the catalyst system (B) improves the bulk density which in turn improves the output rates of the applied process.

The catalyst system (B) has a surface area measured according to ASTM D 3663 of less than 15 $m^2/g$, preferably of less than 10 $m^2/g$. In some embodiments, the catalyst system (B) in accordance with the present invention shows a surface area of 5 $m^2/g$ or less (ASTM D 3663), which is below the detection limit of the apparatus used (BET method/$N_2$).

The catalyst system (B) can be additionally or alternatively defined by the pore volume. Thus it is appreciated that the catalyst system (B) has a porosity measured according to ASTM 4641 of less than 1.40 ml/g, more preferably of less than 1.00 ml/g, still more preferably of less than 0.50 ml/g and even less than 0.20 ml/g. In another preferred embodiment the porosity is not detectable when determined with the method applied as defined in the example section.

Moreover the catalyst system (B) typically has a mean particle size of not more than 500 μm, i.e. preferably in the range of 2 to 500 μm, more preferably 5 to 200 μm. It is in particular preferred that the mean particle size is below 80 μm, still more preferably below 70 μm. A preferred range for the mean particle size is 5 to 80 μm, more preferred 10 to 60 μm. In some cases the mean particle size is in the range of 20 to 50 μm.

Further the solid catalyst composition according to this invention is in particular obtainable, preferably is obtained, according to the process as defined herein. Thus the present invention is further directed to the process for the manufacture of the inventive solid catalyst composition.

First the manufacture of the catalyst system (B) is specified. The above described catalyst system (B) is prepared according to the general methods described in WO 03/051934. This document is herewith included in its entirety by reference. Hence the catalyst system (B) is preferably in the form of solid catalyst particles, obtainable by a process comprising the steps of

(a) preparing a solution of one or more components of the catalyst system (B);
(b) dispersing said solution in a solvent immiscible therewith to form an emulsion in which said one or more components are present in the droplets of the dispersed phase,
(c) solidifying said dispersed phase to convert said droplets to solid particles and optionally recovering said particles to obtain said catalyst system (B).

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst system (B). The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

The thus obtained catalyst system (B) is further employed in the new process for the manufacture of the new solid, catalyst system.

In the broadest aspect the solid catalyst composition is produced by polymerizing olefin monomers, like α-olefins, in the presence of the above defined solid catalyst system (B), i.e. preferably in the presence of a self-supported solid catalyst system (B) comprising a transition metal compound of formula (I) and a cocatalyst (Co). Thus the polymerization is a heterogeneous polymerization. As a consequence of the polymerization process the catalyst system (B) will be dispersed in the growing polymer matrix (A). To avoid an overheating and a dissolving of the catalyst system (B)

during the polymerization the polymerization is run in a diluent comprising a fluorinated compound.

Accordingly the process for the manufacture of a solid catalyst composition according to this invention comprises the steps of

(a) forming in a vessel a dispersion comprising a catalyst system (B), i.e. a solid catalyst system (B), and a diluent comprising a fluorinated hydrocarbon compound (F), wherein the catalyst system (B),

(i) comprises

($\alpha$) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic $\sigma$-ligand, each "L" is independently an organic ligand which coordinates to the transition metal (M),
"R" is a bridging group linking two organic ligands (L), preferably said organic ligands (L) and said bridging groups (R) do not comprise polymerizable olefinic groups,
"m" is 2 or 3,
"n" is 0, 1 or 2,
"q" is 1, 2 or 3, and
m+q is equal to the valency of the transition metal (M), and

($\beta$) a cocatalyst (Co) comprising a metal (M') of Group 13 of the periodic table (IUPAC), preferably a cocatalyst (Co) comprising a compound of Al,

(ii) has

($\alpha$) a porosity measured according to ASTM 4641 of less than 1.40 ml/g, preferably of less than 1.00 ml/g, more preferably of less than 0.50 ml/g, still more preferably of less than 0.20 ml/g and even more preferably the porosity is not detectable,
and/or
($\beta$) a surface area measured according to ASTM D 3663 of less than 25 $m^2$/g, preferably of less than 20 $m^2$/g, more preferably of less than 15. $m^2$/g, still more preferably of less than 10 $m^2$/g, yet more preferably of less than 5 $m^2$/g,
and

(iii) is free of silica carrier material and $MgCl_2$, more preferably is
free of any organic and/or inorganic catalytically inert support material,

(b) feeding at least one olefin monomer, preferably at least one $\alpha$-olefin monomer, into the vessel,
(c) operating the vessel under such conditions that the at least one olefin monomer is polymerized by the catalyst system (B), producing thereby a solid catalyst composition comprising a polymer matrix (A) in which the catalyst system (B) i.e. the solid catalyst (B), is dispersed,
(d) terminating the polymerization of step (c) before the weight ratio of the polymer matrix (A) and the catalyst system (B) [weight polymer matrix (A)/weight catalyst system (B)] in the solid catalyst composition is 25.0 or more.

Preferred is that the termination of the polymerization of step (c) is accomplished so that the weight ratio of the polymer matrix (A) and the catalyst system (B) [weight polymer matrix (A)/weight catalyst system (B)] in the solid catalyst composition is from 1.0 to 6.0, still more preferably from 1.0 to 5.0 and still yet more preferably of from 2.0 to 5.0.

The vessel used in the manufacture of the present invention is preferably stirred well in order to facilitate the dissolution of the gaseous monomer and keeping the monomer concentration constant in the diluents comprising a fluorinated hydrocarbon compound (F).

Preferably the catalyst system (B) has a mean particle size of 5 to 200 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m. In

some cases the mean particle size is in the range of 20 to 50 μm.

Preferred used catalyst systems (B) are those which have been indicated as preferred in the instant invention above. Thus concerning the definition of the transition metal compound, the transition metal (M), the σ-ligand (X), the organic ligand(s) (L), the bridging group(s) (R) and the cocatalyst (Co) it is referred to the definitions given above when defining the solid catalyst composition.

In this context it is in particular mentioned that it is preferred that the organic ligands (L) and/or the bridging groups (R) do not comprise polymerizable olefinic groups having the formula (IV), more preferably do not comprise olefinically unsaturated substituents, still more preferably do not comprise polymerizable olefinic groups.

The diluent comprising a fluorinated hydrocarbon compound (F) to be used must be inert towards the catalyst. This means that it must preferably not contain components having tendency to react with the catalyst system (B), such as groups having functionality and being reactive towards the catalyst system (B). Such groups can contain atoms like oxygen, sulphur, nitrogen, chlorine, fluorine, bromine, iodine and so on alone or as combination. Also groups containing double bonds or triple bonds should be avoided. Especially the presence of compounds like water, alcohols, organic sulphides, ketones, carbon monoxide, carbon dioxide and acetylenic compounds should be avoided.

Preferably the diluent comprising a fluorinated hydrocarbon compound (F) contains less than 100 parts per million (ppm) of compounds containing groups as mentioned in the previous paragraph. More preferably the content of such compounds is less than 50 ppm, still more preferably less than 10 ppm, yet more preferably below the detection limit.

The diluent comprising a fluorinated hydrocarbon compound (F) as used according to this invention has the advantage - for instance compared to oil which sometimes is employed in prepolymerization reactors - that the solvent power toward the catalyst system (B) is very low. On the other hand the solubility of the monomers used for the polymerization of the polymer matrix (A) is good. Further the fluorinated hydrocarbon compounds (F) generally have low viscosities. Both properties, i.e. the dissolution behaviour towards the catalyst system (B) and the monomers, respectively, and the viscosity of the fluorinated hydrocarbon compounds (F), facilitate the mass and heat transfer in the vessel. A good mass and heat transfer is important for the "sheeting" of the catalyst system (B) due to the polymer matrix (A). Low mass and heat transfer might cause a melting of the growing polymer matrix (A) which leads to loss of the excellent morphology, in particular in term of low surface area, of the catalyst system (B).

Accordingly the diluent of the present invention may comprise several components, however one of the components must necessarily a fluorinated hydrocarbon compound (F). Further it is appreciated that the diluent as such has little to no solvent power towards the catalyst system (B). Thus the fluorinated hydrocarbon component(s) (F) can be used individually or as mixtures, and can be included in a mixture with non-fluorinated hydrocarbon compounds if desired.

Preferably the diluent comprises only (a) fluorinated hydrocarbon component(s) (F). In other words the fluorinated hydrocarbon component (F) or a mixture of different fluorinated hydrocarbon components (F) is the diluent used in the inventive process. In particular preferred, the diluent is a fluorinated hydrocarbon component (F), especially a fluorinated hydrocarbon component (F) which is identified in the instant invention as preferred.

Ideally, the diluent comprising the fluorinated hydrocarbon component(s) (F) and/or the fluorinated hydrocarbon component(s) (F) is(are) inert to the polymerization reaction. By "inert to the polymerization reaction" is meant that neither the diluent nor the fluorinated hydrocarbon component(s) (F) react chemically with the monomers, catalyst system (B) or the catalyst system components.

The fluorinated hydrocarbon compounds (F) have at least one carbon atom and at least one fluorine atom. The fluorinated hydrocarbon compounds (F) can be perfluorinated hydrocarbon compounds or the fluorinated hydrocarbon compounds (F) can optionally include one or more hydrogen atom(s). A perfluorinated hydrocarbon compound is a fluorocarbon compound in which all hydrogen atoms directly attached to the carbon atom(s) are replaced by fluorine. See Hawley 's Condensed Chemical Dictionary, Thirteenth Edition, Van Nostrand Renhold, 1997. Examples of preferred perfluorocarbons include linear branched or cyclic, C1 to C40 perfluoroalkanes.

In one embodiment, the fluorinated hydrocarbon compounds (F) are represented by the formula (V)

$$C_xH_yF_z \qquad (V)$$

wherein x is an integer from 1 to 40, preferably from 4 to 30, more preferably from 4 to 20, yet more preferably from 1 to 10, like from 4 to 6, wherein

y is greater than or equal to 0, and
z is an integer and at least one,
more preferably y and z are integers and at least one.

In a preferred embodiment z is 4 or more.

In one embodiment, a mixture of fluorinated hydrocarbon compounds (F) is used in the process of the invention, like a mixture of a perfluorinated hydrocarbon compounds with or without other fluorinated hydrocarbon compounds, or

a mixture of a fluorinated hydrocarbon compounds, not being perfluorinated hydrocarbons.

Non-limiting examples of fluorinated hydrocarbon compounds (F) include 1-fluorobutane, 2-fluorobutane, 1,1-difluorobutane, 1,2-difluorobutane, 1,3-difluorobutane, 1,4-difluorobutane, 2,2-difluorobutane, 2,3-difluorobutane, 1,1,1-trifluorobutane, 1,1,2-trifluorobutane, 1,1,3-trifluorobutane, 1,1,4-trifluorobutane, 1,2,2- trifluorobutane, 1,2,3-trifluorobutane, 1,3,3-trifluorobutane, 2,2,3-trifluorobutane, 1,1,1 ,2-tetrafiuorobutane, 1,1,1 ,3-tetrafluorobutane, 1,1,1 ,4-tetrafluorobutane, 1 , 1 ,2,2-tetrafluorobutane, 1 , 1 ,2,3-tetrafluorobutane, 1 , 1 ,2,4-tetrafluorobutane, 1 , 1 ,3 ,3 -tetrafluorobutane, 1,1,3 ,4-tetrafluorobutane, 1 , 1 ,4,4-tetrafluorobutane, 1 ,2,2,3-tetrafluorobutane, 1 ,2,2,4-tetrafluorobutane, 1 ,2,3,3-tetrafluorobutane, 1 ,2,3 ,4-tetrafluorobutane, 2,2,3,3-tetrafluorobutane, 1,1,1 ,2,2-pentafluorobutane, 1,1,1 ,2,3-pentafluorobutane, 1,1,1 ,2,4-pentafluorobutane, 1,1,1,3,3- pentafluorobutane, 1,1,1 ,3 ,4-pentafluorobutane, 1,1,1 ,4,4-pentafluorobutane, 1 , 1 ,2,2,3-pentafiuorobutane, 1 ,1 ,2,2,4-pentafluorobutane, 1 ,1 ,2,3,3-pentafiuorobutane, 1 ,1 ,2,4,4-pentafluorobutane, 1 , 1 ,3,3,4-pentafluorobutane, 1 ,2,2,3,3-pentafluorobutane, 1 ,2,2,3,4-pentafluorobutane, 1,1,1 ,2,2,3-hexafluorobutane, 1,1,1 ,2,2,4-hexafluorobutane, 1,1,1,2,3,3 -hexafluorobutane, 1,1,1,2,3 ,4-hexafluorobutane, 1,1,1 ,2,4,4-hexafluorobutane, 1 , 1 , 1 ,3 ,3 ,4-hexafluorobutane, 1,1,1 ,3,4,4-hexafluorobutane, 1,1,1 ,4,4,4-hexafluorobutane, 1 , 1 ,2,2,3,3-hexafluorobutane, 1 , 1 ,2,2,3 ,4-hexafluorobutane, 1 , 1 ,2,2,4,4-hexafluorobutane, 1,1,2,3,3,4-hexafluorobutane, 1,1,2,3,4,4-hexafluorobutane, 1 ,2,2,3 ,3 ,4-hexafluorobutane, 1,1,1 ,2,2,3 ,3-heptafluorobutane, 1,1,1 ,2,2,4,4-heptafluorobutane, 1,1,1,2,2,3,4-heptafluorobutane, 1,1,1,2,3,3,4- heptafluorobutane, 1,1,1, 2,3, 4,4-heptafluorobutane, 1,1,1,2,4,4,4-heptafluorobutane, 1,1,1 ,3 ,3 ,4,4-heptafluorobutane, 1, 1, 1,2,2,3 ,3 ,4-octafluorobutane, 1,1,1 ,2,2,3,4,4-octafluorobutane, 1,1,1 ,2,3,3,4,4-octafluorobutane, 1,1,1 ,2,2,4,4,4-octafluorobutane, 1,1,1,2,3 ,4,4,4-octafluorobutane, 1,1,1 ,2,2,3,3,4,4-nonafluorobutane, 1,1,1 ,2,2,3,4,4,4- nonafluorobutane, 1-fluoro-2-methylpfopane, 1,1-difluoro-2-methyl[rho]ropane, 1,3- difluoro-2-methylpropane, 1,1,1 -trifluoro-2-methylpropane, 1,1,3 -trifluoro-2-methylpropane, 1 ,3-difluoro-2-(fluoromethyl)propane, 1,1,1 ,3-tetrafluoro-2- methylpropane, 1,1,3,3-tetrafluoro-2-methylpropane, 1,1,3-trifluoro-2-(fluoromethyl)propane, 1,1,1 ,3,3-pentafluoro-2-methylpropane, 1 , 1 ,3,3- tetrafluoro-2-(fluoromethyl)propane, 1,1,1 ,3-tetrafluoro-2-(fluoromethyl)propane, fluorocyclobutane, 1,1-difluorocyclobutane, 1,2-difluorocyclobutane, 1,3- difluorocyclobutane, 1,1,2-trifluorocyclobutane, 1,1,3-trifluorocyclobutane, 1,2,3-trifluorocyclobutane, 1,1,2,2-tetrafluorocyclobutane, 1,1,3,3-tetrafluorocyclobutane, 1,1,2,2,3-pentafluorocyclobutane, 1,1,2,3,3- pentafluorocyclobutane, 1,1,2,2,3,3-hexafluorocyclobutane, 1,1,2,2,3,4-hexafluorocyclobutane, 1,1,2,3,3,4-hexafluorocyclobutane, 1,1,2,2,3 ,3,4-heptafluorocyclobutane, perfluorodecalin, perfluoroheptane, perfluorohexane, perfluoromethylcyclohexane, perfluorooctane, perfluoro-1,3-dimethylcyclohexane, perfluorononane and perfluorotoluene. In addition to those fluorinated hydrocarbons described herein, those fluorinated hydrocarbons described in Raymond Will, et. al., CEH Marketing Report, Fluorocarbons, Pages 1- 133, by the Chemical Economics Handbook-SRI International, April 2001, which is fully incorporated herein by reference, are included.

In a particular preferred embodiments the fluorinated hydrocarbon compound (F) is selected from the group consisting of perfluorinated C1 to C15 alkane, perfluorodecalin, perfluoroheptane, perfluorohexane, perfluoromethylcyclohexane, perfluorooctane, perfluoro-1,3-dimethylcyclohexane, perfluorononane and perfluorotoluene. The most preferred fluorinated hydrocarbon compound (F) is perfluoro-1,3-dimethylcyclohexane.

Most preferably the fluorinated hydrocarbon compound (F) is perfluoro-1,3-dimethylcyclohexane.

The fluorinated hydrocarbon compounds (F) can be preferably used in combination with one or more inert gases such as nitrogen, hydrogen, argon, neon, helium, krypton, zenon, and the like. In the preferred embodiment, the inert gas is nitrogen.

Preferably the boiling point of the diluents comprising the fluorinated hydrocarbon compound(s) (F) and/or the boiling point of the fluorinated hydrocarbon compounds (F) is(are) in the range of from 0 to 140°C, more preferably in the range of from 30 to 120 °C, and still more preferably in the range of 50 to 110 °C.

Further it is appreciated that the diluents comprising the fluorinated hydrocarbon compound(s) (F) and/or the fluorinated hydrocarbon compounds (F) has(have) a density (at 20 °C) of 2.5 g/cm$^3$ or less, preferably of 2.0 g/cm$^3$ or less, more preferably of 1.9 g/cm$^3$ or less. On the other hand the density should be not to low. Thus it is preferred that the density (at 20 °C) of the diluents comprising the fluorinated hydrocarbon compound(s) (F) and/or the density (at 20 °C) of the fluorinated hydrocarbon compounds (F) is greater than 0.7 g/cm$^3$, more preferably greater than 1.0 g/cm$^3$, still more preferably greater than 1.2 g/cm$^3$.

It is also preferred that the diluent comprising the fluorinated hydrocarbon compounds (F) has the same density as defined above for the fluorinated hydrocarbon compounds (F) alone. Additionally it is appreciated that the diluent comprising the fluorinated hydrocarbon compound (F) is selected in such a manner that the catalyst system (B) has a solubility in the diluent [amount of catalyst system (B) solved in 100 g diluent] below the detection limit.

The dispersion may be formed in any method known in the art. According to a preferred method, the solid catalyst system (B) is introduced into the diluent comprising the fluorinated hydrocarbon compounds (F) under agitation. The dispersion may be prepared in the vessel or it may be prepared in advance and then transferred into the vessel.

The dispersion may be homogenised by agitation. The agitation can be obtained by circulating the dispersion by using a circulation pump and pipes connecting the pump to the vessel. Alternatively, the vessel is equipped with an agitator, which keeps the dispersion within the vessel in motion. Preferably the vessel is equipped with an agitator. The

elements of the agitator should be chosen so that uniform stirring in the whole volume of the vessel is obtained and no dead spots where the catalyst system (B) could settle exist. These stirrer elements, such as anchor type elements and axial and radial impellers are well known in the art and a person skilled in the art can choose a suitable combination for each geometry of the vessel. The vessel may also be equipped with baffles, which are known in the art to further improve the stirring.

As monomers preferably olefins, like α-olefins, are employed. More preferably the olefins, like α-olefins, have 2 to 20 carbon atoms. The olefins, like α-olefins, can be linear or branched, cyclic or acyclic, aromatic or aliphatic. Preferred examples are ethylene, propylene, 1-butene, 1-pentene, 2-methyl-1-butene, 3-methyl-1-butene, 1-hexene, 2-methyl-1-pentene, 3-methyl-1-pentene, 4-methyl-1-pentene, 2-ethyl-1-butene, 2,3-dimethyl-1-butene, 1-octene, styrene, and vinylcyclohexane. Most preferably is (are) ethylene and/or propylene.

The temperature of the dispersion within the vessel during polymerization in step (c) depends on the catalyst system (B) used as well as on the monomers chosen. In any case too high temperatures should be avoided, as otherwise the diluent comprising the fluorinated hydrocarbon compounds (F) tend to get gaseous so that it cannot be conveniently handled in the process and the risk of an overheating in the reaction centre is too high. Thus it is appreciated that the reaction temperature is equal or below 70 °C, more preferably below 65 °C. Of course also to loo low temperatures might cause problems for instance in terms of catalyst particle settling in the vessel. Thus the temperature may be selected from the range of from -30 to 70 °C, more preferably from 0 to 65 °C, yet more preferably from 20 to 55 °C.

The pressure within the vessel at step (c) of the polymerization process shall be kept in a certain range. It is desired that the pressure in the vessel is higher than the atmospheric pressure to minimise the eventual leaks of air and/or moisture into the catalyst feed vessel. Thus it is appreciated that the pressure is in the range of at least 1 to 15 bar, more preferably in the range of 2 to 10 bar, even more preferred in the range of 2.5 to 8 bar.

The vessel shall be maintained in inert atmosphere. Especially, the presence of oxygen and moisture should be avoided.

The gas phase in the vessel should preferably consist of nitrogen, argon and similar inert gases, or their mixtures. Also, the vessel should be equipped with possibility to flush the vessel with inert gas, preferably with nitrogen. Of course in addition to the used monomers also hydrogen can be fed into the vessel.

After the desired polymerization degree and/or the desired amount of transition metal (M) in the solid catalyst composition is reached the polymerization is terminated (step (d)). The termination is preferably achieved by degassing the vessel.

Preferably, the diluent comprising the fluorinated hydrocarbon compounds (F) is removed to obtain the solid catalyst composition according to this invention. The inventive solid catalyst composition can be stored in oil if desired.

The solid catalyst composition as defined in the instant invention can be used without any modification in a process comprising at least one polymerisation reactor as known in the art, like slurry, gas phase, solution reactors. Preferably the polymerisation process configuration comprises at least one slurry reactor, preferably a slurry loop reactor. In addition the process can comprise additional slurry and/or gas phase reactors, as described earlier in this application. Further, in addition to actual polymerisation reactors, the process can comprise prepolymerisation reactors preceding the actual polymerisation steps. Preferably the solid catalyst composition of the present invention is used for the polymerization of polyethylene and/or polypropylene.

The invention will be now described in further detail by providing the following examples.

## EXAMPLES

### 1. Definitions/Measuring Methods

The following definitions of terms and determination methods apply for the above general description of the invention as well as to the below examples unless otherwise defined. **$MFR_2$ (230 °C)** is measured according to ISO 1133 (230 °C, 2.16 kg load).

**MFR (190 °C)** is measured according to ISO 1133 (190 °C, 2.16 kg load).

### Comonomer Content from PE (FTIR)

Comonomer content was determined in a known manner based on Fourier transform infrared spectroscopy (FTIR) determination using Nicolet Magna 550 IR spectrometer together with Nicolet Omnic FTIR software.

Films having a thickness of about 220 to 250 μm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating

time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

From the calibration samples a straight line is obtained as follows:

$$C_i = k \cdot \frac{A_{1378,i}}{s_i} + b$$

where

Ci is the comonomer content of the calibration sample i
$A_{1378,i}$ is the absorbance at appr. 1378 $cm^{-1}$ of sample i
$s_i$ is the thickness of the film made of calibration sample i
k is the slope of the calibration line (obtained by regression analysis), and b is the intercept of the calibration line (obtained by regression analysis).

By using the thus obtained parameters k and b the comonomer content of the samples were obtained from

$$C_x = k \cdot \frac{A_{1378,x}}{s_x} + b$$

where

$C_x$ is the comonomer content of the unknown sample
$A_{1378.x}$ is the absorbance at appr. 1378 $cm^{-1}$ of the unknown sample
$s_x$ is the thickness of the film made of the unknown sample
k is the slope of the calibration line obtained from the calibration samples as above
b is the intercept of the calibration line obtained from the calibration samples.

The method gives the comonomer content in weight-% or in mol-%, depending on which was used in the calibration. If properly calibrated, the same approach may also be used to determine the number of methyl groups, i.e., $CH_3$ per 1000 carbon atoms.

**Comonomer Content from PP (FTIR)**

Ethylene content in propylene polymer was measured by Fourier transmission infrared spectroscopy (FTIR). A thin film of the sample (thickness approximately 250 μm) was prepared by hot-pressing. The area of -CH2- absorption peak (800 - 650 cm-1) was measured with Perkin Elmer FTIR 1600 - spectrometer. The method was calibrated by ethylene content data measured by $^{13}C$ NMR.

**Melting temperature Tm, Crystallization temperature Tc:**

<u>Method 1 for polyethylene</u>

The Melting Temperature ($T_m$) and the Crystallization Temperature ($T_{cr}$) were measured with Mettler TA820 differential scanning calorimeter (DSC) on 3±0.5 mg samples. Both crystallization and melting curves were obtained during 10°C/min cooling and heating scans between -10 - 200 °C. Melting and crystallization temperatures were taken as the peaks of endotherms and exotherms, respectively.

Method 2 for polypropylene

Melting temperature ($T_m$), crystallization temperature ($T_{cr}$), and the degree of crystallinity: measured with Mettler TA820 differential scanning calorimetry (DSC) on 5 to 10 mg, typically 8±0.5 mg samples. Both crystallization and melting curves were obtained during 10°C/min cooling and heating scans between 30 °C and 225 °C. Melting and crystallization temperatures were taken as the peaks of endotherms and exotherms.

**Density**

Density of the fluorinated hydrocarbon compound (F) was measured according to ISO 12185.
Density of the polymer was measured according to ISO 1183-2 / 1872-2B

**Porosity:** BET with $N_2$ gas, ASTM 4641, apparatus Micromeritics Tristar 3000;
sample preparation: at a temperature of 50 °C, 6 hours in vacuum.
**Surface area:** BET with $N_2$ gas ASTM D 3663, apparatus Micromeritics Tristar 3000: sample preparation at a temperature of 50 °C, 6 hours in vacuum.

**Mean particle size** is measured with Coulter Counter LS200 at room temperature with n-heptane as medium
**Median particle size** ($d_{50}$) is measured with Coulter Counter LS200 at room temperature with n-heptane as medium
**Bulk density BD** is measured according ASTM D 1895

**ICP analysis**

The elemental analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours.
The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$, 3 % HF in DI water), a low standard (10 ppm Al in a solution of 5 % $HNO_3$, 3 % HF in DI water), a high standard (50 ppm Al, 50 ppm Hf, 20 ppm Zr in a solution of 5 % $HNO_3$, 3 % HF in DI water) and a quality control sample (20 ppm Al, 20 ppm Hf, 10 ppm Zr in a solution of 5 % $HNO_3$, 3 % HF in DI water).
The content of hafnium was monitored using the 282.022 nm and 339.980 nm lines and the content for zirconium using 339.198 nm line. The content of aluminium was monitored via the 167.081 nm line, when Al concentration in ICP sample was between 0-10 ppm and via the 396.152 nm line for Al concentrations between 10-100 ppm.
The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

wherein

C is the concentration in ppm, related to % content by a factor of 10,000
R is the reported value from the ICP-AES
V is the total volume of dilution in ml
M is the original mass of sample in g

If dilution was required then this also needs to be taken into account by multiplication of C by the dilution factor.

## 2. Preparation of the Examples:

### Example 1

Catalyst system based on complex: *rac*-cyclohexyl(methyl)silanediylbis[2-methyl-4-(4'-*tert*-butylphenyl)indenyl]zirconium dichloride

Preparation of catalyst system (B)

In a jacketed 90 $dm^3$ glasslined stainless steel reactor the complex solution was prepared at - 5 °C adding 0,85 kg of a 24,5 wt% PFPO ((2,2,3,3,4,4,5,5,6,6,7,7,8,8,9,9,9-heptadecafluorononyl)oxirane)/toluene solution very slowly (3.4 ml/min) to 13,5 kg 30wt% MAO(methylaluminoxane )/toluene solution. The temperature was increased to 25°C and the solution was stirred for 60 minutes. After addition of 210 g of the complex the solution was stirred for an additional two hours. That mixture was pumped at 5 1/h to the rotor stator with the rotor stator pair 4M. In the rotor stator with a tip speed of 4 m/s the mixture was mixed with a flow of 32 l/h of PFC (hexadecafluoro-1,3-dimethylcyclohexane) thus forming an emulsion. The droplets in the emulsion were solidified by an excess flow of 450 l/h PFC at a temperature of 76°C in a Teflon hose. The hose was connected to a jacketed 160 $dm^3$ stainless steel reactor equipped with a helical mixing element. In this reactor the catalyst particles were separated from the PFC by density difference. After the complex solution had been utilised the catalyst particles were dried in the 160 $dm^3$ reactor at a temperature of 70°C and a nitrogen flow of 5 kg/h for 7 h.

Porosity and surface area below the detection limit.

mol ratio Co/M (Al/Zr):260 mol/mol

| | |
|---|---|
| Mean particle size: | 26 μm |
| Zr content: | 0.53 wt-% |
| Al content: | 34.5 wt-% |

Preparation of catalyst composition:

15 mL of PFC and 255.0 mg of the catalyst system prepared above were taken into a 125-mL stainless steel reactor. Reactor was thermostated to 30 °C and 20 mmol of hydrogen was added. Stirring was set to 450 rpm. Polymerisation was initiated by addition of propylene (≈2.3 bar partial pressure). During the polymerisation the total pressure was kept at 5.6 bar. The reaction was continued for 60 min after which the reactor was degassed and flushed repeatedly with nitrogen. After evaporation of the PFC the weight increase of the catalyst (5.46 g) was calculated to correspond to the polymerisation degree: 5.46 g/0.255 g = 21.4 g polymer/ 1.0 g cat. The solid catalyst composition was a freely flowable powder. By scanning electron microscopy the shape of the solid catalyst composition replicates the shape of the catalyst particles of the catalyst system (i.e. before polymerisation).

### Example 2

Polymerisation of propylene using the solid catalyst composition from Example 1

Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 592.0 mg of the solid catalyst composition (corresponding to 26.4 mg of the original, non-polymerised catalyst) prepared in Example 1 was flushed to the reactor with PFC (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 480 g. The catalyst activity was 36.4 kg PP/gcat•h based on the original, non-polymerised dry catalyst. The walls of the reactor were clean. The polymer powder was freely flowing with morphology replicating the morphology of the original catalyst powder. MFR (2/230) = 10.3 g/10 min.

**Example 3 (comparative)**

The polymerisation of Example 2 was repeated but this time using the catalyst system (not catalyst composition) prepared in example 1.

32.6 mg of the catalyst system prepared in example 1 was used in the propylene polymerisation. Otherwise the procedure in Example 2 was followed. The yield was 347 g corresponding to the catalyst activity of 21.3 kg PP/gcat•h. Some polymer sheeting was seen on the reactor walls. The surface of the polymer particles was rugged and the shape of the polymer particles did not match well with the shape of the catalyst particles. MFR (2/230) = 10.2 g/10 min.

**Example 4**

Preparation of catalyst composition:

The same catalyst system as prepared in example 1 was used for preparation of the catalyst composition.

15 mL) of perfluoro-1,3-dimethylcyclohexane (PFC) and 248 mg of catalyst system were taken into a 125-mL stainless steel reactor. Reactor was thermostated to 30 °C and 6 mmol of hydrogen was added. Stirring was set to 450 rpm. Polymerisation was initiated by addition of propylene (≈2.1 bar partial pressure). During the polymerisation the total pressure was kept at 3.0 bar. The reaction was continued for 60 min after which the reactor was degassed and flushed repeatedly with nitrogen. After evaporation of the PFC the weight increase of the catalyst (1.07 g) was calculated to correspond to the polymerisation degree: 1.07 g/0.248 g = 4.3 g polymer/1.0 g cat. The solid catalyst composition was a freely flowable powder. By scanning electron microscopy the shape of the solid catalyst composition replicates the shape of the catalyst particles of the catalyst system (i.e. before polymerisation); see figure 1.

**Example 5**

Polymerisation of propylene using the solid catalyst composition from Example 4 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 147.4 mg of the solid catalyst composition (corresponding to 27.8 mg of the original, non-polymerised catalyst) prepared in Example 4 was flushed to the reactor with PFC (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 287 g. The catalyst activity was 20.6 kg PP/gcat•h based on the original, non-polymerised dry catalyst. The walls of the reactor were clean. The polymer powder was freely flowing with morphology replicating the morphology of the original catalyst powder. MFR (2/230) =23:7 g/10 min.

**Example 6**

Preparation of catalyst composition:

The same catalyst system as prepared in example 1 was used for preparation of the catalyst composition.

15 mL of perfluoro-1,3-dimethylcyclohexane (PFC) and 249 mg of catalyst system were taken into a 125-mL stainless steel reactor. Reactor was thermostated to 30 °C and 1.5 mmol of hydrogen was added. Stirring was set to 450 rpm. Polymerisation was initiated by addition of propylene (≈4.6 bar partial pressure). During the polymerisation the total pressure was kept at 5.0 bar. The reaction was continued for 90 min after which the reactor was degassed and flushed repeatedly with nitrogen. After evaporation of the PFC the weight increase of the catalyst (3.47 g) was calculated to correspond to the polymerisation degree: 3.47 g/0.249 g = 13.9 g polymer/1.0 g cat. The solid catalyst composition was a freely flowable powder. By scanning electron microscopy the shape of the solid catalyst composition replicates the shape of the catalyst particles before modification.

**Example 7**

Polymerisation of propylene using the solid catalyst composition from Example 6 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 353.0 mg of the solid catalyst composition (corresponding to 23.6 mg of the original, non-polymerised catalyst) prepared in Example 6 was flushed to the reactor with PFC (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 333 g. The catalyst activity was 28.2 kg PP/gcat•h based on

the original, non-polymerised dry catalyst. The walls of the reactor were clean. The polymer powder was freely flowing with morphology replicating the morphology of the solid catalyst composition. MFR (2/230) = 19.7 g/10 min.

**Example 8**

Preparation of catalyst composition:

The same catalyst system as prepared in example 1 was used for preparation of the catalyst composition.

15 mL of perfluoro-1,3-dimethylcyclohexane (PFC) and 253.5 mg of the catalyst system were taken into a 125-mL stainless steel reactor. Reactor was thermostated to 30 °C and 1.5 mmol of hydrogen was added. Stirring was set to 450 rpm. Polymerisation was initiated by addition of propylene (≈4.6 bar partial pressure). During the polymerisation the total pressure was kept at 5.0 bar. The reaction was continued for 30 min after which the reactor was degassed and flushed repeatedly with nitrogen. After evaporation of the PFC the weight increase of the catalyst (3.47 g) was calculated to correspond to the polymerisation degree: 1.42 g/0.2535 g = 5.6 g polymer/1.0 g cat. The solid catalyst compostion was a freely flowable powder.

**Example 9**

Polymerisation of propylene using the solid catalyst composition from Example 8 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 180.3 mg of the solid catalyst composition (corresponding to 27.3 mg of the original, non-polymerised catalyst) prepared in Example 8 was flushed to the reactor with propylene and nitrogen overpressure. Stirring was set to 250 rpm. Reactor temperature was increased to 70°C in 15 min after which the polymerisation reaction was continued for 30 min. Then, the reactor was degassed, flushed with nitrogen, and opened. The polypropylene yield was 351 g. The catalyst activity was 25.7 kg PP/gcat•h based on the original, non-polymerised dry catalyst. The walls of the reactor were clean. The polymer powder was freely flowing with morphology replicating the morphology of the solid catalyst composition. MFR (2/230) = 18.8 g/10 min.

**Example 10**

Preparation of catalyst composition:

The same catalyst system as prepared in example 1 was used for preparation of the catalyst composition.

15 mL of perfluoro-1,3-dimethylcyclohexane (PFC) and 253.8 mg of the catalyst system were taken into a 125-mL stainless steel reactor. Reactor was thermostated to 30 °C and 1.5 mmol of hydrogen was added. Stirring was set to 450 rpm. Polymerisation was initiated by addition of propylene (≈4.6 bar partial pressure). During the polymerisation the total pressure was kept at 5.0 bar. The reaction was continued for 15 min after which the reactor was degassed and flushed repeteadly with nitrogen. After evaporation of the PFC the weight increase of the catalyst (0.78 g) was calculated to correspond to the polymerisation degree: 0.78 g/0.2538 g = 3.1 g polymer/1.0 g cat. The solid catalyst composition was a freely flowable powder.

**Example 11**

Polymerisation of propylene using the solid catalyst composition from Example 10 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 110.1 mg of the solid catalyst composition (corresponding to 27.1 mg of the original, non-prepolymerised catalyst) prepared in Example 10 was flushed to the reactor with n-pentane (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 375 g. The catalyst activity was 27.7 kg PP/gcat•h based on the original, non-polymerised dry catalyst. The walls of the reactor were clean. The polymer powder was freely flowing with morphology replicating the morphology of the solid catalyst composition. MFR (2/230) = 18.4 g/10 min.

**Example 12**

Preparation of catalyst composition:

The same catalyst system as prepared in example 1 was used for preparation of the catalyst composition.

15 mL of perfluoro-1,3-dimethylcyclohexane (PFC) and 256.4 mg of the catalyst system were taken into a 125-mL stainless steel reactor. Reactor was thermostated to 30 °C and 1.5 mmol of hydrogen was added. Stirring was set to 450 rpm. Polymerisation was initiated by addition of propylene (≈4.6 bar partial pressure). During the polymerisation the total pressure was kept at 5.0 bar. The reaction was continued for 7 min after which the reactor was degassed and flushed repeatedly with nitrogen. After evaporation of the PFC the weight increase of the catalyst (0.39 g) was calculated to correspond to the polymerisation degree: 0.39 g/0.2564 g = 1.5 g polymer/1.0 g cat. The solid catalyst composition was a freely flowable powder.

**Example 13**

Polymerisation of propylene using the solid catalyst composition from Example 12 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 74.5 mg of the solid catalyst composition (corresponding to 29.4 mg of the original, non-polymerised catalyst) prepared in Example 12 was flushed to the reactor with n-pentane (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 246 g. The catalyst activity was 16.7 kg PP/gcat•h based on the original, non-polymerised dry catalyst. The walls of the reactor were clean. The polymer powder was freely flowing with morphology replicating the morphology of the solid catalyst composition. MFR (2/230) = 25.5 g/10 min.

**Example 14**

Preparation of catalyst composition:

The same catalyst system as prepared in example 1 was used for preparation of the catalyst composition.

15 mL of perfluoro-1,3-dimethylcyclohexane (PFC) and 256.7 mg of the catalyst system were taken into a 125-mL stainless steel reactor. Reactor was thermostated to 30 °C and no hydrogen was added. Stirring was set to 450 rpm. Polymerisation was initiated by addition of propylene (≈7 bar partial pressure). During the polymerisation the total pressure was kept at 7.0 bar. The reaction was continued for 120 min after which the reactor was degassed and flushed repeatedly with nitrogen. After evaporation of the PFC the weight increase of the catalyst (6.41 g) was calculated to correspond to the polymerisation degree: 6.41 g/0.2567 g = 25.0 g polymer/1.0 g cat. The solid catalyst composition was a freely flowable powder.

**Example 15**

Polymerisation of propylene using the solid catalyst composition from Example 14 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 715.2 mg of the solid catalyst composition (corresponding to 27.6 mg of the original, non-polymerised catalyst) prepared in Example 14 was flushed to the reactor with n-pentane (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 194 g. The catalyst activity was 14.1 kg PP/gcat•h based on the original, non-polymerised dry catalyst. The walls of the reactor were clean. The polymer powder was freely flowing with morphology replicating the morphology of the solid catalyst composition. MFR (2/230) = 31.1 g/10 min.

**Example 16**

Polymerisation of propylene using the solid catalyst composition from Example 8 after dispersed in oil

The solid catalyst composition from Example 8 (578.7 mg) was mixed with Primol 352 white oil (2.66 g) by shaking to form a catalyst/oil dispersion. Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 871.5 mg of the catalyst/oil dispersion (corresponding to 27.8 mg of the original, non-polymerised catalyst) was flushed to the reactor with small amount of propylene and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 301 g. The catalyst activity was 21.7 kg PP/gcat•h based on the original, non-polymerised dry catalyst. The walls of the reactor were clean. The polymer powder was freely flowing with morphology replicating the morphology of the solid catalyst composition. MFR (2/230) = 22.0 g/10 min.

**Example 17**

Preparation of catalyst composition:

The same catalyst system as prepared in example 1 was used for preparation of the catalyst composition.

15 mL of perfluoro-1,3-dimethylcyclohexane (PFC) and 1.355 g of the catalyst system were taken into a 125-mL stainless steel reactor. Reactor was thermostated to 45 °C and 1.5 mmol of hydrogen was added. Stirring was set to 450 rpm. Polymerisation was initiated by addition of propylene (≈4.6 bar partial pressure). During the polymerisation the total pressure was kept at 5.0 bar. The reaction was continued for 15 min after which the reactor was degassed and flushed repeatedly with nitrogen. After evaporation of the PFC the weight increase of the catalyst (3.17 g) was calculated to correspond to the polymerisation degree: 3.17 g/1.355 g = 2.3 g polymer/1.0 g cat. The solid catalyst composition was a freely flowable powder.

**Example 18**

Polymerisation of propylene using the solid catalyst composition from Example 17 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 92.2 mg of the solid catalyst composition (corresponding to 27.6 mg of the original, non-polymerised catalyst) prepared in Example 17 was flushed to the reactor with PFC (5 mL) and nitrogen overpressure. Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 227 g. The catalyst activity was 16.4 kg PP/gcat•h based on the original, non-polymerised dry catalyst. The walls of the reactor were clean. The polymer powder was freely flowing with morphology replicating the morphology of the solid catalyst composition. MFR (2/230) = 29.2 g/10 min.

**Example 19**

Preparation of catalyst composition:

The same catalyst system as prepared in example 1 was used for preparation of the catalyst composition.

15 mL of perfluoro-1,3-dimethylcyclohexane (PFC) and 1.354 g of the catalyst system were taken into a 125-mL stainless steel reactor. Reactor was thermostated to 30 °C and 1.5 mmol of hydrogen was added. Stirring was set to 900 rpm. Polymerisation was initiated by addition of propylene (≈4.6 bar partial pressure). During the polymerisation the total pressure was kept at 5.0 bar. The reaction was continued for 15 min after which the reactor was degassed and flushed repeatedly with nitrogen. After evaporation of the PFC the weight increase of the catalyst (3.28 g) was calculated to correspond to the polymerisation degree: 3.28 g/1.354 g = 2.4 g polymer/1.0 g cat. The solid catalyst composition was a freely flowable powder.

**Example 20**

Polymerisation of propylene using the solid catalyst composition from Example 19 Liquid propylene (1400 g), triisobutylaluminium solution (0.25 mL TIBA in 5 mL of pentane) and hydrogen (20 mmol) were introduced to a 5-L stainless steel reactor. Temperature of the reactor was stabilised to 30 °C and 98.0 mg of the solid catalyst composition (corresponding to 27.6 mg of the original, non-polymerised catalyst) prepared in Example 19 was flushed to the reactor with PFC (5 mL) and nitrogen overpressure.

Stirring was set to 250 rpm. Reactor temperature was increased to 70 °C in 15 min after which the polymerisation reaction was continued for 30 min. Then, the reactor was degassed, flushed with nitrogen, and opened. The polypropylene yield was 243 g. The catalyst activity was 17.0 kg PP/gcat•h based on the original, non-polymerised dry catalyst. The walls of the reactor were clean. The polymer powder was freely flowing with morphology replicating the morphology of the solid catalyst composition. MFR (2/230) = 27.3 g/10 min.

**Example 21**

Catalyst system based on complex: bis(n-butyl-cyclopentadienyl)hafnium dibenzyl $(n\text{-}BuCp)_2HfBz_2$

Catalyst system was prepared as follows

In a jacketed 90 $dm^3$ glasslined stainless steel reactor the complex solution was prepared at - 5 °C adding 1.45

kg of a 24.5 wt% PFPO/toluene solution very slowly (3.4 ml/min) to 23 kg 30 wt.-% methylaluminoxane/toluene solution. The temperature was increased to 25 °C and the solution was stirred for 60 minutes. After addition of 308 g of (n-BuCp)2HfBz2 (Hf-content 75,3 w% in toluene) the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC thus forming an emulsion. The droplets in the emulsion were solidified by an excess flow of 350 l/h PFC at a temperature of 86 °C in a Teflon hose. The hose was connected to a jacketed 160 $dm^3$ stainless steel reactor equipped with a helical mixing element. In this reactor the catalyst particles were separated from the PFC by density difference. After the complex solution had been utilized the catalyst particles were dried in the 160 $dm^3$ reactor at a temperature of 70 °C and a nitrogen flow of 5 kg/h for 4 h.

| | |
|---|---|
| Porosity: | Below the detection limit |
| Surface area: | Below the detection limit |
| Mean particle size: | 50 μm |
| Molar ratio Al/Hf: | 300 mol/mol |
| Al content: | 34.9 wt.-% |
| Hf content: | 0.79 wt.-% |

Preparation of catalyst composition:

737.2 mg of the catalyst system prepared according to this example and 40 ml of PFC was added to a 125 ml stainless steel reactor. The temperature inside the reactor was adjusted to 50 °C. After this the reactor was pressurised with 3 bar of ethylene. It was calculated that 0.15 g of the ethylene was needed to fill up the gas-phase and saturate the PFC phase. The reactor was vented after 1.1 g of additional ethylene had been consumed. Stirring rate was 200 RPM and polymerisation time 34 min.

The polymer produced has a polymerisation degree of 1.5 g PE/g cat.

**Example 22**

Polymerisation of ethylene using the solid catalyst composition from Example 21

The solid catalyst composition was added directly to a 125 ml stainless steel reactor. 30 g of propane was added as polymerisation medium at room temperature. 1.6 ml 1-hexene was used as comonomer. 1 ml of 1 wt.-% TiBA was used as scavenger. The comonomer and scavenger was added with the polymerisation medium. The polymerization took place for 60 min at 80 °C and with an ethylene partial pressure of 7.5 bar. The yield was 4.7 g and thereby activity was 0.16 kg PE/1.0 g cat. No fouling.

**Example 23**

Catalyst system is based on the same complex, complex bis(n-butylcyclopentadienyl)hafnium dibenzyl(n-BuCp)$_2$HfBz$_2$, as in example 21.

Catalyst system was prepared as follows

In a jacketed 90 $dm^3$ glass-lined stainless steel reactor the complex solution was prepared at - 5 °C adding 1.26 kg of a 24.5 wt.-% PFPO ((2,2,3,3,4,4,5,5,6,6,7,7,8,8,9,9,9-heptadecafluorononyl)oxirane)/toluene solution very slowly (3.4 ml/min) to 20 kg 30 wt.-% methylaluminoxane/toluene solution. The temperature was increased to 25 °C and the solution was stirred for 60 minutes. After addition of 253 g of complex (Hf-content 78.8 w% in toluene) the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC (hexadecafluoro-1,3-dimethylcyclohexane) thus forming an emulsion. The droplets in the emulsion were solidified by an excess flow of 450 l/h PFC at a temperature of 60 °C in a Teflon hose. The hose was connected to a jacketed 160 $dm^3$ stainless steel reactor equipped with a helical mixing element. In this reactor the catalyst particles were separated from the PFC by density difference. After the complex solution had been utilized the catalyst particles were dried in the 160 $dm^3$ reactor at a temperature of 70 °C and a nitrogen flow of 5 kg/h for 4 h.

| | |
|---|---|
| Porosity: | Below the detection limit |
| Surface area: | Below the detection limit |

(continued)

| | |
|---|---|
| Molar ratio Al/Hf: | 300 mol/mol |
| Al content: | 34.4 wt-% |
| Hf content: | 0.71 wt-%. |

**Examples 24 - 25 (Comparative)**

Polymerizations of ethylene were carried out using the catalyst system according to example 23. Catalyst system was fed into the ethylene polymerization reactor as oil-slurry.

**Table 1:** Polymerisation of ethylene using catalyst system bis(n-butylcyclopentadienyl)hafnium dibenzyl (non-polymerised) of example 23

| | | Example 24 | Example 25 |
|---|---|---|---|
| Catalyst type | | Example 23 | Example 23 |
| Scale | [ml] | 130 | 130 |
| polymerization degree | | - | - |
| Amount of catalyst -oil -slurry | [mg] | 1002 | 1060 |
| Amount catalyst | [mg] | 5.1 | 5.3 |
| Pressure (C2) | [bar] | 7 | 7 |
| 1-hexene | [ml/(ml C3)] | 0.023 | 0.023 |
| Yield | [g] | 1.25 | 0.50 |
| activity | [kg/(g h)] | 0.27 | 0.11 |
| Comments | | fouling | fouling |

Table 1 shows that if catalyst system without a polymer matrix is fed into standard test polymerisation conditions, the catalyst fouls the reactor.

## Claims

**1.** Solid catalyst composition comprising a polymer matrix (A) and distributed therein a solid catalyst system (B), wherein

(a) the solid catalyst system (B)

(i) has

($\alpha$) a porosity measured according to ASTM 4641 of less than 1.40 ml/g, and/or
($\beta$) a surface area measured according to ASTM D3663 of less than 15 $m^2/g$,

(ii) comprises

($\alpha$) a transition metal compound of formula (I)

$$L_nR_nMX_q \qquad (I)$$

wherein

"M" is a transition metal of anyone of the groups 3 to 10 of the periodic table (ICTPAC),
each "X" is independently a monovalent anionic $\sigma$-ligand,
each "L" is independently an organic ligand which coordinates to the transition metal (M),
"R" is a bridging group linking two organic ligands (L),

said organic ligands (L) and said bridging groups (R) do not comprise polymerizable olefinic groups,
"m" is 2 or 3,
"n" is 0, 1 or 2,
"q" is 1,2 or 3,
m+q is equal to the valency of the transition metal (M),

and
(β) a cocatalyst (Co) comprising a compound of Al,
and

(iii) is free of silica carrier material and $MgCl_2$,
and

(b) the weight ratio of the polymer matrix (A) and the catalyst system (B) [weight polymer matrix (A)/weight catalyst system (B)] in the solid catalyst composition is in the range of 1.0 to 6.0.

**2.** Solid catalyst composition according to claim 1, wherein

(a) the mol ratio of Al of the cocatalyst (Co) and the transition metal "M" of the transition metal compound [Al/M] is from 100 to 800 mol/mol
and/or
(b) the polymer matrix (A) is not covalent bonded to anyone of the organic ligands (L) and/or to anyone of the bridging groups (R) of the transition metal compound.

**3.** Solid catalyst composition according to claim 1 or 2, wherein

(a) the transition metal compound of formula (I) and a cocatalyst (Co) comprising Al compound constitute at least 60 wt.-%, preferably at least 85 wt.-%, of the catalyst system (B) and additionally organic or inorganic material at most 40 wt.-%, preferably at most 15 wt.-%, of the catalyst system (B),
and/or
(b) the catalyst system (B) does not comprise any catalytic inert organic and/or inorganic material
and/or
(c) the polymer matrix (A) comprises, preferably consists of, polyethylene and/or polypropylene.

**4.** Solid catalyst composition according to anyone of the preceding claims, wherein the transition metal compound has a formula (II)

$$(Cp)_2R_nMX_2 \qquad (II)$$

"M" is zirconium (Zr), hafnium (Hf), or titanium (Ti), preferably zirconium (Zr) or hafnium (Hf),
each "X" is independently a monovalent anionic σ-ligand,
each "Cp" is independently an unsaturated organic cyclic ligand which coordinates to the transition metal (M),
"R" is a bridging group linking two organic ligands (L) and the bridging group (R) has the formula (III)

$$-Y(R')_2- \qquad (III)$$

wherein
Y is carbon (C), silicon (Si) or germanium (Ge), and
R' is $C_1$ to $C_{20}$ alkyl, $C_6$ to $C_{12}$ aryl, $C_7$ to $C_{12}$ arylalkyl, or trimethylsilyl,
"n" is 0 or 1, and
at least one "Cp"-ligand, preferably both "Cp"-ligands, is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

**5.** Solid catalyst composition according to anyone of the preceding claims, wherein the cocatalyst (C) is a trialkylaluminium and/or aluminoxane compound.

**6.** Solid catalyst composition according to anyone of the preceding claims, wherein the solid catalyst composition is obtainable, preferably is obtained, by polymersing at least one olefin monomer in the presence of the catalyst system (B) being in a solid form.

**7.** Solid catalyst composition according to any one of the preceding claims, wherein the solid catalyst composition is obtainable, preferably is obtained, according to the process as defined in anyone of the claims 8 to 14.

**8.** Process for the manufacture of a solid catalyst composition comprising the steps of

(a) forming in a vessel a dispersion comprising a catalyst system (B) and a diluent comprising a fluorinated hydrocarbon compound (F), wherein the catalyst system (B)

(i) comprises

(α) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic σ-ligand,
each "L" is independently an organic ligand which coordinates to the transition metal (M),
"R" is a bridging group linking two organic ligands (L),
said organic ligands (L) and said bridging groups (R) do not comprise polymerizable olefinic groups,
"m" is 2 or 3,
"n" is 0, 1 or 2,
"q" is 1, 2 or 3, and
m+q is equal to the valency of the transition metal (M), and
(β) a cocatalyst (Co) comprising a metal (M') of Group 13 of the periodic table (IUPAC), preferably a cocatalyst (Co) comprising a compound of Al,

(ii) has

(α) a porosity measured according to ASTM 4641 of less than 1.40 ml/g,
and/or
(β) a surface area measured according to ASTM D 3663 of less than $15 m^2/g$,
and

(iii) is free of silica carrier material and $MgCl_2$,

(b) feeding at least one olefin monomer, preferably at least one α-olefin monomer, into the vessel,
(c) operating the vessel under such conditions that the at least one olefin monomer is polymerized by the catalyst system (B), producing thereby a solid catalyst composition comprising a polymer matrix (A) in which the solid catalyst system (B) is dispersed,
(d) terminating the polymerization of step (c) when the weight ratio of the polymer matrix (A) and the catalyst system (B) [weight polymer matrix (A)/weight catalyst system (B)] in the solid catalyst composition is in the range of 1.0 to 6.0.

**9.** Process according to claim 8, wherein the diluent comprises only fluorinated hydrocarbon compounds (F).

**10.** Process according to claim 8 or 9, wherein

(a) the diluent and/or the fluorinated hydrocarbon compound (F) has density measured according to ISO 12185 (at 20 °C) of less than $2.5 g/m^3$,
and/or
(b) fluorinated hydrocarbon compounds (F) are represented by the formula (V)

$C_xH_yF_z$ (V)

wherein

x is an integer from 1 to 40, preferably 4 to 15,
y is greater than or equal to 0, preferably at least 1 and
z is an integer and at least one, preferably z is an integer and more than 2,
more preferably y and z are integers and at least one.

**11.** Process according to anyone of the preceding claims 8 to 10, wherein the diluent is perfluoro-1,3-dimethylcyclohexane.

**12.** Process according to anyone of the preceding claims 8 to 11, wherein

(a) the transition metal compound and/or the cocatalyst (C) is (are) further defined as in anyone of the claims 1 to 7, and/or
(b) wherein the olefin monomer is ethylene and/or propylene

**13.** Process according to anyone of the preceding claims 8 to 12, wherein

(a) in step (c) the temperature within the vessel is kept equal or below 70 °C and/or the pressure within the vessel is from 1 to 15 bar
and
(b) optionally in step (d) the termination of the polymerization is achieved by degassing the vessel.

**14.** Use of a solid catalyst composition according to any one of the preceding claims 1 to 7 in a process, preferably in a process comprising at least one loop and/or at least one gas phase reactor, for the manufacture of a polymer, like polyethylene or polypropylene.

**Patentansprüche**

**1.** Feste Katalysator-Zusammensetzung, umfassend eine Polymer-Matrix (A) und verteilt darin ein festes Katalysator-System (B), wobei

(a) das feste Katalysator-System (B)

(i) aufweist

(α) eine Porosität, gemessen gemäß ASTM 4641, von weniger als 1,40 ml/g,
und/oder
(β) eine Oberfläche, gemessen gemäß ASTM D3663, von weniger als 15 $m^2$/g,

(ii) umfasst

(α) eine Übergangs-Metall-Verbindung der Formel (I)

$L_mR_nMX_q$ (I)

worin

"M" ein Übergangs-Metall von irgendeiner der Gruppen 3 bis 10 des Periodensystems (IUPAC) ist,
jedes "X" unabhängig ein einwertiger anionischer σ-Ligand ist,
jedes "L" unabhängig ein organischer Ligand, der an das Übergangs-Metall (M) koordiniert, ist,
"R" eine Brücken-Gruppe, die zwei organische Liganden (L) verbindet, ist,
wobei die organischen Liganden (L) und die Brücken-Gruppen (R) keine polymerisierbaren olefinischen Gruppen umfassen,
"m" 2 oder 3 ist,

"n" 0, 1 oder 2 ist,
"q" 1, 2 oder 3 ist,
m+q gleich der Wertigkeit des ÜbergangsMetalls (M) ist,
und

(β) einen Cokatalysator (Co), umfassend eine Verbindung von Al,
und

(iii) frei von Siliziumdioxid-Träger-Material und $MgCl_2$ ist,
und

(b) das Gewichts-Verhältnis der Polymer-Matrix (A) und des Katalysator-Systems (B) [Gewicht Polymer-Matrix (A) / Gewicht Katalysator-System (B)] in der festen Katalysator-Zusammensetzung in dem Bereich von 1,0 bis 6,0 ist.

**2.** Feste Katalysator-Zusammensetzung nach Anspruch 1, wobei

(a) das Mol-Verhältnis von Al von dem Cokatalysator (Co) und dem Übergangs-Metall "M" von der Übergangs-Metall-Verbindung [Al/M] von 100 bis 800 Mol/Mol ist und/oder
(b) die Polymer-Matrix (A) nicht an irgendeinen von den organischen Liganden (L) und/oder an irgendeine von den Brücken-Gruppen (R) der Übergangs-Metall-Verbindung kovalent gebunden ist.

**3.** Feste Katalysator-Zusammensetzung nach Anspruch 1 oder 2, wobei

(a) die Übergangs-Metall-Verbindung der Formel (I) und ein Cokatalysator (Co), umfassend Al-Verbindung, mindestens 60 Gew.-%, vorzugsweise mindestens 85 Gew.-%, von dem Katalysator-System (B) und zusätzlich organisches oder anorganisches Material von höchstens 40 Gew.-%, vorzugsweise höchstens 15 Gew.-%, von dem Katalysator-System (B), ausmachen,
und/oder
(b) das Katalysator-System (B) nicht beliebiges katalytisch inertes organisches und/oder anorganisches Material umfasst,
und/oder
(c) die Polymer-Matrix (A) Polyethylen und/oder Polypropylen umfasst, vorzugsweise daraus besteht.

**4.** Feste Katalysator-Zusammensetzung nach einem der vorangehenden Ansprüche, wobei die Übergangs-Metall-Verbindung eine Formel (II) aufweist

$$(Cp)_2R_nMX_2 \qquad (II)$$

"M" Zirkonium (Zr), Hafnium (Hf) oder Titan (Ti), vorzugsweise Zirkonium (Zr) oder Hafnium (Hf), ist,
jedes "X" unabhängig ein einwertiger anionischer σ-Ligand ist,
jedes "Cp" unabhängig ein ungesättigter organischer cyclischer Ligand, der an das Übergangs-Metall (M) koordiniert, ist,
"R" eine Brücken-Gruppe ist, die zwei organische Liganden (L) verbindet und die Brücken-Gruppe (R) die Formel (III) aufweist

$$-Y(R')_2- \qquad (III)$$

worin

Y Kohlenstoff (C), Silizium (Si) oder Germanium (Ge) ist, und
R' $C_1$ bis $C_{20}$ Alkyl, $C_6$ bis $C_{12}$ Aryl, $C_7$ bis
$C_{12}$ Arylalkyl oder Trimethylsilyl ist,

"n" 0 oder 1 ist, und
mindestens ein "Cp"-Ligand, vorzugsweise beide "Cp"-Liganden, ausgewählt ist (sind) aus der Gruppe, bestehend aus unsubstituiertem Cyclopentadienyl, unsubstituiertem Indenyl, unsubstituiertem Tetrahydroindenyl, unsubstituiertem Fluorenyl, substituiertem Cyclopentadienyl, substituiertem Indenyl, substituiertem Tetrahydroindenyl und substituiertem Fluorenyl.

**5.** Feste Katalysator-Zusammensetzung nach einem der vorangehenden Ansprüche, wobei der Cokatalysator (C) eine Trialkylaluminium- und/oder Aluminoxan-Verbindung ist.

**6.** Feste Katalysator-Zusammensetzung nach einem der vorangehenden Ansprüche, wobei die feste Katalysator-Zusammensetzung durch Polymerisieren mindestens eines Olefin-Monomers in Gegenwart des Katalysator-Systems (B), das in einer festen Form vorliegt, erhältlich ist, vorzugsweise erhalten wird.

**7.** Feste Katalysator-Zusammensetzung nach einem der vorangehenden Ansprüche, wobei die feste Katalysator-Zusammensetzung nach dem Verfahren, wie in einem der Ansprüche 8 bis 14 definiert, erhältlich ist, vorzugsweise erhalten wird.

**8.** Verfahren zur Herstellung einer festen Katalysator-Zusammensetzung, umfassend die Schritte von

(a) Bilden in einem Gefäß einer Dispersion, umfassend ein Katalysator-System (B) und ein Verdünnungsmittel, umfassend eine fluorierte Kohlenwasserstoff-Verbindung (F), wobei das Katalysator-System (B)

(i) umfasst

($\alpha$) eine Übergangs-Metall-Verbindung der Formel (I)

$$L_mR_nMX_q \qquad (I)$$

worin

"M" ein Übergangs-Metall von irgendeiner der Gruppen 3 bis 10 des Periodensystems (IUPAC) ist,
jedes "X" unabhängig ein einwertiger anionischer $\sigma$-Ligand ist,
jedes "L" unabhängig ein organischer Ligand, der an das Übergangs-Metall (M) koordiniert, ist,
"R" eine Brücken-Gruppe, die zwei organische Liganden (L) verbindet, ist, wobei die organischen Liganden (L) und die Brücken-Gruppen (R) keine polymerisierbaren olefinischen Gruppen umfassen,
"m" 2 oder 3 ist,
"n" 0, 1 oder 2 ist,
"q" 1, 2 oder 3 ist, und
m+q gleich der Wertigkeit des ÜbergangsMetalls (M) ist,
und

(ß) einen Cokatalysator (Co), umfassend ein Metall (M') von Gruppe 13 des Periodensystems (IUPAC), vorzugsweise einen Cokatalysator (Co), umfassend eine Verbindung von Al,

(ii) aufweist

($\alpha$) eine Porosität, gemessen gemäß ASTM 4641, von weniger als 1,40 ml/g,
und/oder
(ß) eine Oberfläche, gemessen gemäß ASTM D 3663, von weniger als 15 $m^2$/g,
und

(iii) frei von Siliziumdioxid-Träger-Material und $MgCl_2$ ist,

(b) Zuführen mindestens eines Olefin-Monomers, vorzugsweise mindestens eines $\alpha$-Olefin-Monomers, in das Gefäß,
(c) Betreiben des Gefäßes unter derartigen Bedingungen, dass das mindestens eine Olefin-Monomer durch das Katalysator-System (B) polymerisiert wird, unter Erzeugen dabei einer festen Katalysator-Zusammensetzung, umfassend eine Polymer-Matrix (A), in welcher das feste Katalysator-System (B) dispergiert ist,
(d) Beenden der Polymerisation von Schritt (c), wenn das Gewichts-Verhältnis von der Polymer-Matrix (A) und dem Katalysator-System (B) [Gewicht Polymer-Matrix (A) / Gewicht Katalysator-System (B)] in der festen Katalysator-Zusammensetzung in dem Bereich von 1,0 bis 6,0 ist.

**9.** Verfahren nach Anspruch 8, wobei das Verdünnungsmittel nur fluorierte Kohlenwasserstoff-Verbindungen (F) umfasst.

**10.** Verfahren nach Anspruch 8 oder 9, wobei

(a) das Verdünnungsmittel und/oder die fluorierte Kohlenwasserstoff-Verbindung (F) eine Dichte aufweist, gemessen gemäß ISO 12185 (bei 20°C), von weniger als 2,5 g/m$^3$,
und/oder
(b) fluorierte Kohlenwasserstoff-Verbindungen (F) wiedergegeben werden durch die Formel (V)

$$C_xH_yF_z \qquad (V)$$

worin

x eine ganze Zahl 1 bis 40, vorzugsweise 4 bis 15, ist
y größer als oder gleich 0, vorzugsweise mindestens 1, ist und
z eine ganze Zahl und mindestens eins ist, vorzugsweise z eine ganze Zahl und mehr als 2 ist, bevorzugter y und z ganze Zahlen und mindestens eins sind.

**11.** Verfahren nach einem der vorangehenden Ansprüche 8 bis 10, wobei das Verdünnungsmittel Perfluor-1,3-dimethylcyclohexan ist.

**12.** Verfahren nach einem der vorangehenden Ansprüche 8 bis 11, wobei

(a) die Übergangs-Metall-Verbindung und/oder der Cokatalysator (C) weiterhin wie in irgendeinem der Ansprüche 1 bis 7 definiert ist (sind),
und/oder
(b) wobei das Olefin-Monomer Ethylen und/oder Propylen ist.

**13.** Verfahren nach einem der vorangehenden Ansprüche 8 bis 12, wobei

(a) in Schritt (c) die Temperatur in dem Gefäß gleich oder unter 70°C gehalten wird und/oder der Druck in dem Gefäß von 1 bis 15 bar ist
und
(b) gegebenenfalls in Schritt (d) die Beendigung der Polymerisation durch Entgasen des Gefäßes erreicht wird.

**14.** Verwendung von einer festen Katalysator-Zusammensetzung nach einem der vorangehenden Ansprüche 1 bis 7 in einem Verfahren, vorzugsweise in einem Verfahren, umfassend mindestens einen Schleifen- und/oder mindestens einen GasPhasen-Reaktor, zur Herstellung von einem Polymer, wie Polyethylen oder Polypropylen.

**Revendications**

**1.** Composition de catalyseur solide comprenant une matrice polymère (A) et, distribué dans celle-ci, un système catalyseur solide (B), dans laquelle

(a) le système catalyseur solide (B)

(i) présente

($\alpha$) une porosité, mesurée conformément à la norme ASTM 4641, inférieure à 1,40 ml/g, et/ou
($\beta$) une surface spécifique, mesurée conformément à la norme ASTM D3663, inférieure à 15 m$^2$/g,

(ii) comprend

($\alpha$) un composé de métal de transition de formule (I)

$$L_mR_nMX_q \qquad (I)$$

dans laquelle

"M" est un métal de transition de l'un quelconque des Groupes 3 à 10 du Tableau Périodique (IUPAC),
chaque "X" est indépendamment un ligand $\sigma$ anionique monovalent,
chaque "L" est indépendamment un ligand organique qui se coordonne au métal de transition (M),
"R" est un groupe pontant liant deux ligands organiques (L),
lesdits ligands organiques (L) et lesdits groupes pontants (R) ne comprennent pas de groupes oléfiniques polymérisables,
"m" vaut 2 ou 3,
"n" vaut 0, 1 ou 2,
"q" vaut 1, 2 ou 3,
la somme m+q est égale à la valence du métal de transition (M),
et

($\beta$) un cocatalyseur (Co) comprenant un composé d'Al,
et

(iii) est exempt de matériau de support de silice et de $MgCl_2$, et

(b) le rapport en poids de la matrice polymère (A) sur le système catalyseur (B) [poids de la matrice polymère (A) / poids du système catalyseur (B)] dans la composition de catalyseur solide est situé dans la plage allant de 1,0 à 6,0.

**2.** Composition de catalyseur solide selon la revendication 1, dans laquelle

(a) le rapport molaire de l'Al du cocatalyseur (Co) sur le métal de transition "M" du composé de métal de transition [Al/M] est de 100 à 800 mol/mol,
et/ou
(b) la matrice polymère (A) n'est pas liée de manière covalente à l'un quelconque des ligands organiques (L) et/ou à l'un quelconque des groupes pontants (R) du composé de métal de transition.

**3.** Composition de catalyseur solide selon la revendication 1 ou 2, dans laquelle

(a) le composé de métal de transition de formule (I) et un cocatalyseur (Co) comprenant un composé d'Al représentent au moins 60 % en poids, de préférence au moins 85 % en poids du système catalyseur (B) et de plus les matériaux organiques ou inorganiques représentent au plus 40 % en poids, de préférence au plus 15 % en poids du système catalyseur (B),
et/ou
(b) le système catalyseur (B) ne comprend aucun matériau organique et/ou inorganique inerte catalytique,
et/ou
(c) la matrice polymère (A) comprend, de préférence consiste en, du polyéthylène et/ou du polypropylène.

**4.** Composition de catalyseur solide selon l'une quelconque des revendications précédentes, dans laquelle le composé de métal de transition est de formule (II)

$$(Cp)_2R_nMX_2 \qquad (II)$$

"M" est le zirconium (Zr), le hafnium (Hf) ou le titane (Ti), de préférence le zirconium (Zr) ou le hafnium (Hf),
chaque "X" est indépendamment un ligand $\sigma$ anionique monovalent,
chaque "Cp" est indépendamment un ligand cyclique organique insaturé qui se coordonne au métal de transition (M),
"R" est un groupe pontant liant deux ligands organiques (L) et le groupe pontant (R) est de formule (III)

$$-Y(R')_2- \qquad (III)$$

dans laquelle

Y est le carbone (C), le silicium (Si) ou le germanium (Ge), et
R' est un alkyle en $C_1$ à $C_{20}$, un aryle en $C_6$ à $C_{12}$, un arylalkyle en $C_7$ à $C_{12}$, ou triméthylsilyle,
"n" vaut 0 ou 1, et
au moins un ligand "Cp", de préférence les deux ligands "Cp", est/sont choisi(s) dans l'ensemble constitué par cyclopentadiényle non substitué, indényle non substitué, tétrahydroindényle non substitué, fluorényle non substitué, cyclopentadiényle substitué, indényle substitué, tétrahydroindényle substitué, et fluorényle substitué.

**5.** Composition de catalyseur solide selon l'une quelconque des revendications précédentes, dans laquelle le cocatalyseur (C) est un composé trialkyl-aluminium et/ou aluminoxane.

**6.** Composition de catalyseur solide selon l'une quelconque des revendications précédentes, laquelle composition de catalyseur solide peut être obtenue, de préférence est obtenue, par polymérisation d'au moins un monomère d'oléfine en présence du système catalyseur (B) qui est sous une forme solide.

**7.** Composition de catalyseur solide selon l'une quelconque des revendications précédentes, laquelle composition de catalyseur solide peut être obtenue, de préférence est obtenue, conformément au procédé tel que défini dans l'une quelconque des revendications 8 à 14.

**8.** Procédé pour la fabrication d'une composition de catalyseur solide, comprenant les étapes consistant à :

(a) former dans un récipient une dispersion comprenant un système catalyseur (B) et un diluant comprenant un composé hydrocarboné fluoré (F), le système catalyseur (B)

(i) comprenant

($\alpha$) un composé de métal de transition de formule (I)

$$L_mR_nMX_q \qquad (I)$$

dans laquelle

"M" est un métal de transition de l'un quelconque des Groupes 3 à 10 du Tableau Périodique (IUPAC),
chaque "X" est indépendamment un ligand $\sigma$ anionique monovalent,
chaque "L" est indépendamment un ligand organique qui se coordonne au métal de transition (M),
"R" est un groupe pontant liant deux ligands organiques (L),
lesdits ligands organiques (L) et lesdits groupes pontants (R) ne comprennent pas de groupes oléfiniques polymérisables,
"m" vaut 2 ou 3,
"n" vaut 0, 1 ou 2,
"q" vaut 1, 2 ou 3,
la somme m+q est égale à la valence du métal de transition (M),
et

($\beta$) un cocatalyseur (Co) comprenant un métal (M') du Groupe 13 du Tableau Périodique des Eléments (IUPAC), de préférence un cocatalyseur (Co) comprenant un composé d'Al,

(ii) présentant

($\alpha$) une porosité, mesurée conformément à la norme ASTM 4641, inférieure à 1,40 ml/g, et/ou
($\beta$) une surface spécifique, mesurée conformément à la norme ASTM D3663, inférieure à 15 $m^2/g$, et

(iii) étant exempt de matériau de support de silice et de $MgCl_2$,

(b) introduire au moins un monomère d'oléfine, de préférence au moins un monomère d'$\alpha$-oléfine, dans le récipient,
(c) faire fonctionner le récipient dans des conditions telles que l'au moins un monomère d'oléfine soit polymérisé

par le système catalyseur (B), en produisant ainsi une composition de catalyseur solide comprenant une matrice polymère (A) dans laquelle le système catalyseur solide (B) est dispersé,
(d) terminer la polymérisation de l'étape (c) quand le rapport en poids de la matrice polymère (A) sur le système catalyseur (B) [poids de la matrice polymère (A) / poids du système catalyseur (B)] dans la composition de catalyseur solide est situé dans la plage allant de 1,0 à 6,0.

**9.** Procédé selon la revendication 8, dans lequel le diluant comprend uniquement des composés hydrocarbonés fluorés (F).

**10.** Procédé selon la revendication 8 ou 9, dans lequel

(a) le diluant et/ou le composé hydrocarboné fluoré (F) a/ont une masse volumique, mesurée conformément à la norme ISO 12185 (à 20°C), inférieure à 2,5 g/m$^3$,
et/ou
(b) les composés hydrocarbonés fluorés (F) sont représentés par la formule (V)

$$C_xH_yF_z \qquad (V)$$

dans laquelle

x est un entier de 1 à 40, de préférence de 4 à 15,
y est supérieur ou égal à 0 et de préférence vaut au moins 1, et
z est un entier valant au moins un, de préférence z est un entier et est supérieur à 2,
plus préférablement y et z sont des entiers valant au moins un.

**11.** Procédé selon l'une quelconque des revendications 8 à 10, dans lequel le diluant est le perfluoro-1,3-diméthylcyclohexane.

**12.** Procédé selon l'une quelconque des revendications 8 à 11, dans lequel

(a) le composé de métal de transition et/ou le cocatalyseur (C) est/sont en outre défini(s) comme dans l'une quelconque des revendications 1 à 7,
et/ou
(b) le monomère d'oléfine est l'éthylène et/ou le propylène.

**13.** Procédé selon l'une quelconque des revendications 8 à 12, dans lequel

(a) dans l'étape (c), la température à l'intérieur du récipient est maintenue égale ou inférieure à 70°C et/ou la pression à l'intérieur du récipient est de 1 à 15 bar, et
(b) éventuellement, dans l'étape (d), la terminaison de la polymérisation est obtenue par dégazage du récipient.

**14.** Utilisation d'une composition de catalyseur solide selon l'une quelconque des revendications 1 à 7 dans un procédé, de préférence dans un procédé comprenant au moins un réacteur à boucle et/ou au moins un réacteur en phase gazeuse, pour la fabrication d'un polymère, tel que le polyéthylène ou le polypropylène.

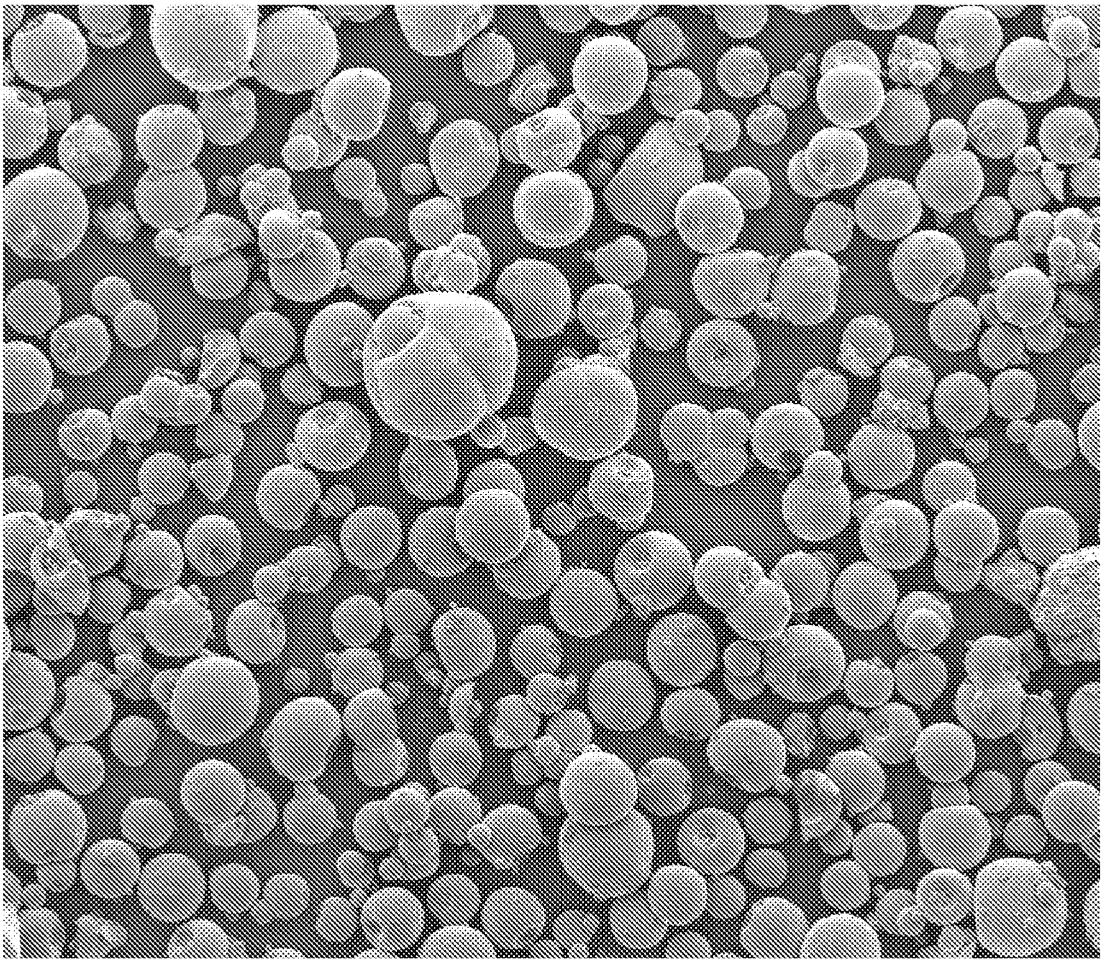

Figure 1: Particles of the obtained solid catalyst composition

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03051934 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9613529 A
- WO 9710248 A
- WO 9941290 A
- WO 9910353 A
- WO 02060963 A


### Non-patent literature cited in the description


- **V. C. GIBSON et al.** *Angew. Chem. Int. Ed., engl.,* 1999, vol. 38, 428-447
- **REVIEW OF V. C. GIBSON.** *Angew. Chem. Int. Ed., engl.,* 1999, vol. 38, 428-447
- CEH Marketing Report, Fluorocarbons. **RAYMOND WILL.** Chemical Economics Handbook-SRI International. April 2001, 1-133